# EUROPEAN PATENT APPLICATION

(11) **EP 4 528 431 A1**
(43) Date of publication of application: **26.03.2025**
(21) Application number: 23830171.7
(22) Date of filing: 26.06.2023
(51) Int. Cl.: G06F 1/3234

(54) **ENERGY-SAVING MANAGEMENT METHOD AND APPARATUS, AND COMPUTING DEVICE AND COMPUTER-READABLE STORAGE MEDIUM**

(30) Priority: 28.06.2022 CN 202210746494; 29.08.2022 CN 202211041812
(71) Applicant: Huawei Technologies Co., Ltd., Shenzhen, Guangdong 518129 (CN)
(72) Inventor: WANG, Jiangtao, Shenzhen, Guangdong 518129 (CN); WU, Junjie, Shenzhen, Guangdong 518129 (CN); CHEN, Hua, Shenzhen, Guangdong 518129 (CN)
(74) Representative: Gill Jennings & Every LLP
(86) International application number: PCT/CN2023/102343
(87) International publication number: WO 2024/001994

(57) **Abstract**

This application provides an energy efficiency management method and apparatus, a computing device, and a computer-readable storage medium, to reduce power consumption of a device running a service without affecting performance of the service. Specifically, the energy efficiency management method includes: detecting a type of sensitivity of a service running in a device to a performance requirement; selecting a part of a plurality of running parameters of the device based on the type of sensitivity of the service, where the selected running parameter is a running parameter with low relevance to the type of sensitivity of the service; and then adjusting the selected running parameter or an associated parameter associated with the selected running parameter, so that a corresponding resource that is in the device and that is occupied by the service is reduced, and power consumption of the device after the adjustment is lower than power consumption of the device before the adjustment. In addition, because an adjusted parameter is of low relevance to the type of sensitivity of the service, performance of the service is not affected after the adjustment is performed on the device.

## Description

This application claims priorities to Chinese Patent Application No. 202210746494.2, filed with the China National Intellectual Property Administration on June 28, 2022 and entitled "ENERGY EFFICIENCY MANAGEMENT METHOD", and to Chinese Patent Application No. 202211041812.1, filed with the China National Intellectual Property Administration on August 29, 2022 and entitled "ENERGY EFFICIENCY MANAGEMENT METHOD AND APPARATUS, COMPUTING DEVICE, AND COMPUTER-READABLE STORAGE MEDIUM", both of which are incorporated herein by reference in their entireties.

### TECHNICAL FIELD

This application relates to the field of energy efficiency management, and in particular, to an energy efficiency management method and apparatus, a computing device, and a computer-readable storage medium.

### BACKGROUND

In the information technology (IT) industry, data centers consumes highest power. Power-consuming devices in the data center include an IT device, a cooling system, a power supply and distribution system, a lighting system, an operations and maintenance system, and the like. Among these power-consuming devices, the IT device is a leading power-consuming device.

Currently, the IT device mainly determines, by using an advanced configuration and power interface (ACPI) module or a basic input/output system (BIOS) of an operating system (OS), or by using a dynamic voltage and frequency scaling (DVFS) technology, whether some parameters of the device exceed a threshold during running, to determine whether to trigger energy efficiency management of the device, and therefore reduce power consumption of the device. However, in specific implementation, to avoid great impact of the energy efficiency management on service running, in the foregoing method, a margin is usually reserved for threshold setting, and implementation of the energy efficiency management on a device is delayed. Consequently, the energy efficiency management is affected.

Therefore, how to reduce power consumption of an IT device is still an urgent problem that needs to be resolved in the field of energy efficiency management.

### SUMMARY

This application provides an energy efficiency management method and apparatus, a computing device, and a computer-readable storage medium, to reduce power consumption of a device more significantly without affecting performance of a service running in the device.

According to a first aspect, an embodiment of this application provides an energy efficiency management method. The method includes: detecting a type of sensitivity of a service running in a device to a performance requirement; selecting a part of a plurality of running parameters of the device based on the type of sensitivity of the service, where the selected running parameter is a running parameter with low relevance to the type of sensitivity of the service; and adjusting the selected running parameter or an associated parameter associated with the selected running parameter. It should be understood that, because an adjusted parameter is of low relevance to the type of sensitivity of the service, the adjustment does not affect performance of the service. In addition, running of a related component (including a component used to run the service) in the device can be controlled by adjusting a part of the running parameters of the device or associated parameters associated with the part of the running parameters, so that a corresponding resource that is in the device and that is occupied by the service is reduced, and power consumption of the device after the adjustment is lower than power consumption of the device before the adjustment, thereby reducing carbon emissions of the device. Particularly, for a system, for example, a data center, that has a large quantity of devices, the foregoing method can reduce power consumption of the devices in the data center, thereby reducing carbon emissions of the entire data center, and implementing green development and dual carbon goals (that is, carbon peak and carbon neutrality) of the data center.

In a possible implementation of the first aspect, the plurality of running parameters of the device include a plurality of running parameters required for running the service. The plurality of running parameters of the device represent a state of the device when the device runs a service, for example, a power load percentage in the device, a rotational speed of a fan in the device, a clock cycle in the device, a quantity and a frequency of processor cores included in a processor in the device, a cache bandwidth in the device, a memory bandwidth in the device, and a duty cycle of a memory in the device. The plurality of running parameters required for running the service are parameters related to running of the service, and may specifically include parameters that are required for running the service and that correspond to a plurality of resources, for example, a quantity and a frequency of processor cores required for running the service, a cache bandwidth required for running the service, a memory bandwidth required for running the service, and a duty cycle. It should be understood that when the plurality of running parameters of the device include the plurality of running parameters required for running the service, the selected running parameter may include a running parameter required for running the service. In this case, a corresponding resource that is in the device and that is occupied by the service can be reduced by adjusting the running parameter required for running the service, so that the power consumption of the device after the adjustment is lower than the power consumption of the device before the adjustment.

In a possible implementation of the first aspect, the type of sensitivity of the service includes one or more of the following: an instruction delay-sensitive service that is sensitive to a response delay of instruction processing, a cache bandwidth-sensitive service that is sensitive to a cache bandwidth in the device, a memory bandwidth-sensitive service that is sensitive to a memory bandwidth in the device, and a storage medium response delay-sensitive service that is sensitive to a response delay of a storage medium in the device.

In a possible implementation of the first aspect, for the instruction delay-sensitive service, the selected running parameter or the associated parameter is a parameter corresponding to a resource that has no impact on the response delay of instruction processing or has little impact on the response delay of instruction processing in a plurality of resources required for running the service. For the cache bandwidth-sensitive service, the selected running parameter or the associated parameter is a parameter corresponding to a resource that has no impact on the cache bandwidth in the device or has little impact on the cache bandwidth in the device in a plurality of resources required for running the service. For the memory bandwidth-sensitive service, the selected running parameter or the associated parameter is a parameter corresponding to a resource that has no impact on the memory bandwidth in the device or has little impact on the memory bandwidth in the device in a plurality of resources required for running service. For the storage medium response delay-sensitive service, the selected running parameter or the associated parameter is a parameter corresponding to a resource that has no impact on the response delay of the storage medium in the device or has little impact on the response delay of the storage medium in the device in a plurality of resources required for running the service. In this way, when the selected running parameter is adjusted, there is no impact on performance of the service, or there is little impact (that is, ignorable impact) on performance of the service.

Further, the plurality of running parameters of the device include one or more of the following: a state (for example, an on state, an off state, or a standby state) of the processor core in the device, the frequency of the processor core in the device, a frequency of a memory in the device, a duty cycle of the memory in the device, a frequency of a cache in the device, and a state (for example, a running state, an idle (idle) state, a standby (standby) state, or an off state) of the storage medium in the device. For the instruction delay-sensitive service, the selected running parameter includes one or more of the following: the frequency of the memory in the device, the duty cycle of the memory in the device, the frequency of the cache in the device, and the state of the storage medium in the device. For the cache bandwidth-sensitive service, the selected running parameter includes one or more of the following: the state of the processor core in the device, the frequency of the processor core in the device, the frequency of the memory in the device, the duty cycle of the memory in the device, and the state of the storage medium in the device. For the memory bandwidth-sensitive service, the selected running parameter includes one or more of the following: the state of the processor core in the device, the frequency of the processor core in the device, the frequency of the cache in the device, and the state of the storage medium in the device. For the storage medium response delay-sensitive service, the selected running parameter includes one or more of the following: the state of the processor core in the device, the frequency of the processor core in the device, the frequency of the memory in the device, the duty cycle of the memory in the device, and the frequency of the cache in the device.

Further, for the instruction delay-sensitive service, the adjusting the selected running parameter or the associated parameter includes one or more of the following: setting the state of some processor cores in the device to the off state or the standby state, decreasing the frequency of the memory in the device, decreasing the duty cycle of the memory in the device, decreasing the frequency of the cache in the device, and setting the state of the storage medium in the device to the idle state, the standby state, or the off state. In this way, at least one of the resources, that is, the memory, the cache, and the storage medium in the device, occupied by the service can be reduced without affecting the performance of the service, thereby reducing power consumption of the memory, the cache, and the storage medium in the device. For the cache bandwidth-sensitive service, the adjusting the selected running parameter or the associated parameter includes one or more of the following: setting the state of the processor core in the device to the off state or the standby state, decreasing the frequency of the processor core in the device, decreasing the frequency of the memory in the device, decreasing the duty cycle of the memory in the device, and setting the state of the storage medium in the device to the idle state, the standby state, or the off state. In this way, at least one of the resources, that is, the processor core, the memory, and the storage medium in the device, occupied by the service can be reduced without affecting the performance of the service, thereby reducing power consumption of the processor core, the memory, and the storage medium in the device. For the memory bandwidth-sensitive service, the adjusting the selected running parameter or the associated parameter includes one or more of the following: setting the state of the processor core in the device to the off state or the standby state, decreasing the frequency of the processor core in the device, decreasing the frequency of the cache in the device, and setting the state of the storage medium in the device to the idle state, the standby state, or the off state. In this way, at least one of the resources, that is, the processor core, the cache, and the storage medium in the device, occupied by the service can be reduced without affecting the performance of the service, thereby reducing power consumption of the processor core, the cache, and the storage medium in the device. For the storage medium response delay-sensitive service, the adjusting the selected running parameter or the associated parameter includes one or more of the following: setting the state of the processor core in the device to the off state or the standby state, decreasing the frequency of the processor core in the device, decreasing the frequency of the cache in the device, decreasing the frequency of the memory in the device, and decreasing the duty cycle of the memory in the device. In this way, at least one of the resources, that is, the processor core, the cache, and the memory in the device, occupied by the service can be reduced without affecting the performance of the service, thereby reducing power consumption of the processor core, the cache, and the memory in the device.

In a possible implementation of the first aspect, the instruction delay-sensitive service includes one or more of the following: an e-commerce transaction service, a financial transaction service, an online education service, and a high-performance computing service. The cache bandwidth-sensitive service and the memory bandwidth-sensitive service include one or more of the following: a video-on-demand service, a big data read-write service, and a distributed storage service. The storage medium response delay-sensitive service includes one or more of the following: a data backup service, or a video data transmission service between a video surveillance camera and a storage device.

In a possible implementation of the first aspect, target resources required for running the service are distributed in a plurality of resource groups. Different resource groups include a same resource. The adjusting the selected running parameter or the associated parameter includes: adjusting, at different amplitudes based on the different resource groups, a running parameter related to the target resource or an associated parameter associated with the running parameter related to the target resource.

In a possible implementation of the first aspect, the plurality of resource groups include a hot resource group and a warm resource group. Resource usage of the hot resource group is higher than resource usage of the warm resource group. The adjustment at different amplitudes includes: adjusting the running parameter related to the target resource or the running parameter related to the target resource, to adjust the hot resource group to improving the resource usage or maintaining the original resource usage, and adjust the warm resource group to reducing the resource usage. In this way, the target resource occupied by the service can be reduced overall, and the power consumption of the device can be reduced.

Further, for the instruction delay-sensitive service, the target resource is a processor core in the device, and the adjustment at different amplitudes includes one or more of the following: increasing or skipping adjusting a frequency of a processor core in the hot resource group, and decreasing a frequency of a processor core in the warm resource group or a cold resource group. In this way, usage of the processor core that is in the device and that is occupied by the service can be reduced without affecting the performance of the service, thereby reducing the power consumption of the device. For the cache bandwidth-sensitive service, the target resource is a cache in the device, and the adjustment at different amplitudes includes one or more of the following: increasing or skipping adjusting a frequency of a cache in the hot resource group, and decreasing a frequency of a cache in the warm resource group. In this way, usage of the cache that is in the device and that is occupied by the service can be reduced without affecting the performance of the service, thereby reducing the power consumption of the device. For the memory bandwidth-sensitive service, the target resource is a memory in the device, and the adjustment at different amplitudes includes one or more of the following: increasing or skipping adjusting a frequency of a memory in the hot resource group, increasing or skipping adjusting a duty cycle of the memory in the hot resource group, decreasing a frequency of a memory in the warm resource group, and decreasing a duty cycle of the memory in the warm resource group. In this way, usage of the memory that is in the device and that is occupied by the service can be reduced without affecting the performance of the service, thereby reducing the power consumption of the device. For the storage medium response delay-sensitive service, the target resource is a storage medium in the device, and the adjustment at different amplitudes includes one or more of the following: maintaining a storage medium in the hot resource group in a working state, and setting a state of a storage medium in the warm resource group to a standby state. In this way, usage of the storage medium that is in the device and that is occupied by the service can be reduced without affecting the performance of the service, thereby reducing the power consumption of the device.

Further, the plurality of resource groups include the cold resource group. Resource usage of the cold resource group is lower than the resource usage of the warm resource group. The adjustment at different amplitudes further includes: for the instruction delay-sensitive service, turning off a part of or all processor cores in the cold resource group. In this way, usage of the processor cores that are in the device and that are occupied by the service can be further reduced without affecting the performance of the service, thereby reducing the power consumption of the device more significantly; for the cache bandwidth-sensitive service, releasing a part of or all caches in the cold resource group. In this way, usage of the caches that are in the device and that are occupied by the service can be further reduced without affecting the performance of the service, thereby reducing the power consumption of the device more significantly; for the memory bandwidth-sensitive service, releasing a part of or all memories in the cold resource group. In this way, usage of the memory that is in the device and that is occupied by the service can be further reduced without affecting the performance of the service, thereby reducing the power consumption of the device more significantly; and for the storage medium response delay-sensitive service, setting a state of a storage medium in the cold resource group to an idle state. In this way, usage of the storage medium that is in the device and that is occupied by the service can be further reduced without affecting the performance of the service, thereby reducing the power consumption of the device more significantly.

It should be understood that, in actual application, load of the service running in the device may fluctuate. In the foregoing manner, the service may be run by the hot resource group. When the load of the service increases, the warm resource group and the cold resource group supplement resources for the hot resource group in time. Further, when resources in the warm resource group are insufficient, the cold resource group may supplement resources for the warm resource group in time. In this way, the performance of the service is not affected. When the load of the service decreases, some resources in the hot resource group may be switched to the warm resource group, and further, some resources in the warm resource group may be switched to the cold resource group. In this way, a target resource occupied by the service can be reduced, thereby reducing the power consumption of the device. In general, in the foregoing manner, the power consumption of the device can still be reduced when the load of the service fluctuates.

In a possible implementation of the first aspect, after the adjusting the selected running parameter or the associated parameter, the method further includes: adjusting an adjustment amplitude of the selected running parameter or the associated parameter based on a difference between power consumption of the device after the adjustment and power consumption of the device before the adjustment and a difference between performance of the service after the adjustment and performance of the service before the; and readjusting the selected running parameter or the associated parameter based on an adjusted adjustment amplitude. Power consumption of the device after the readjustment is lower than power consumption of the device before the readjustment, and the performance of the service is not affected after the readjustment. It should be understood that, in actual application, power consumption that can be reduced by adjusting the selected running parameter or the associated parameter only once may not be the largest. In the foregoing manner, the power consumption of the device and the performance of the service after the adjustment are used as feedback for a next adjustment, to form a closed-loop adjustment manner, thereby reducing as much power consumption of the device as possible without affecting the performance of the service.

In a possible implementation of the first aspect, the method further includes: adjusting a quantity of target resources in each resource group based on the difference. The adjusting an adjustment amplitude of the selected running parameter or the associated parameter includes: adjusting, at different amplitudes based on the different resource groups, an adjustment amplitude of a running parameter related to the target resource or an associated parameter associated with the running parameter related to the target resource. In this way, the power consumption of the device can still be reduced as much as possible when the load of the service fluctuates.

In a possible implementation of the first aspect, the device includes at least one of a server (for example, an ARM server or an x86 server) and the storage medium (for example, a solid-state drive (solid-state drive, SSD) or a hard disk drive (hard disk drive, HDD)).

According to a second aspect, an embodiment of this application provides an energy efficiency management apparatus, where the apparatus includes a determining module and an adjustment module. The determining module is configured to detect a type of sensitivity of a service running in a device to a performance requirement. The adjustment module is configured to: select a part of a plurality of running parameters of the device based on the type of sensitivity of the service, and adjust the selected running parameter or an associated parameter associated with the selected running parameter, to reduce a corresponding resource that is in the device and that is occupied by the service. The selected running parameter is a running parameter with low relevance to the type of sensitivity of the service, power consumption of the device after the adjustment is lower than power consumption of the device before the adjustment, and the adjustment does not affect performance of the service.

In a possible implementation of the second aspect, the plurality of running parameters of the device include a plurality of running parameters required for running the service. The plurality of running parameters of the device represent a state of the device when the device runs a service, for example, a power load percentage in the device, a rotational speed of a fan in the device, a clock cycle in the device, a quantity and a frequency of processor cores included in a processor in the device, a cache bandwidth in the device, a memory bandwidth in the device, and a duty cycle of a memory in the device. The plurality of running parameters required for running the service are parameters related to running of the service, and may specifically include parameters that are required for running the service and that correspond to a plurality of resources, for example, a quantity and a frequency of processor cores required for running the service, a cache bandwidth required for running the service, a memory bandwidth required for running the service, and a duty cycle.

In a possible implementation of the second aspect, the type of sensitivity of the service includes one or more of the following: an instruction delay-sensitive service that is sensitive to a response delay of instruction processing, a cache bandwidth-sensitive service that is sensitive to a cache bandwidth in the device, a memory bandwidth-sensitive service that is sensitive to a memory bandwidth in the device, and a storage medium response delay-sensitive service that is sensitive to a response delay of a storage medium in the device.

In a possible implementation of the second aspect, for the instruction delay-sensitive service, the selected running parameter or the associated parameter is a parameter corresponding to a resource that has no impact on the response delay of instruction processing or has little impact on the response delay of instruction processing in a plurality of resources required for running the service. For the cache bandwidth-sensitive service, the selected running parameter or the associated parameter is a parameter corresponding to a resource that has no impact on the cache bandwidth in the device or has little impact on the cache bandwidth in the device in a plurality of resources required for running the service. For the memory bandwidth-sensitive service, the selected running parameter or the associated parameter is a parameter corresponding to a resource that has no impact on the memory bandwidth in the device or has little impact on the memory bandwidth in the device in a plurality of resources required for running service. For the storage medium response delay-sensitive service, the selected running parameter or the associated parameter is a parameter corresponding to a resource that has no impact on the response delay of the storage medium in the device or has little impact on the response delay of the storage medium in the device in a plurality of resources required for running the service.

Further, the plurality of running parameters of the device include one or more of the following: a state (for example, an on state, an off state, or a standby state) of the processor core in the device, the frequency of the processor core in the device, a frequency of a memory in the device, a duty cycle of the memory in the device, a frequency of a cache in the device, and a state (for example, a running state, an idle (idle) state, a standby (standby) state, or an off state) of the storage medium in the device. For the instruction delay-sensitive service, the selected running parameter includes one or more of the following: the frequency of the memory in the device, the duty cycle of the memory in the device, the frequency of the cache in the device, and the state of the storage medium in the device. For the cache bandwidth-sensitive service, the selected running parameter includes one or more of the following: the state of the processor core in the device, the frequency of the processor core in the device, the frequency of the memory in the device, the duty cycle of the memory in the device, and the state of the storage medium in the device. For the memory bandwidth-sensitive service, the selected running parameter includes one or more of the following: the state of the processor core in the device, the frequency of the processor core in the device, the frequency of the cache in the device, and the state of the storage medium in the device. For the storage medium response delay-sensitive service, the selected running parameter includes one or more of the following: the state of the processor core in the device, the frequency of the processor core in the device, the frequency of the memory in the device, the duty cycle of the memory in the device, and the frequency of the cache in the device.

Further, for the instruction delay-sensitive service, the adjusting the selected running parameter or the associated parameter includes one or more of the following: setting the state of some processor cores in the device to the off state or the standby state, decreasing the frequency of the memory in the device, decreasing the duty cycle of the memory in the device, decreasing the frequency of the cache in the device, and setting the state of the storage medium in the device to the idle state, the standby state, or the off state. For the cache bandwidth-sensitive service, the adjusting the selected running parameter or the associated parameter includes one or more of the following: setting the state of the processor core in the device to the off state or the standby state, decreasing the frequency of the processor core in the device, decreasing the frequency of the memory in the device, decreasing the duty cycle of the memory in the device, and setting the state of the storage medium in the device to the idle state, the standby state, or the off state. For the memory bandwidth-sensitive service, the adjusting the selected running parameter or the associated parameter includes one or more of the following: setting the state of the processor core in the device to the off state or the standby state, decreasing the frequency of the processor core in the device, decreasing the frequency of the cache in the device, and setting the state of the storage medium in the device to the idle state, the standby state, or the off state. For the storage medium response delay-sensitive service, the adjusting the selected running parameter or the associated parameter includes one or more of the following: setting the state of the processor core in the device to the off state or the standby state, decreasing the frequency of the processor core in the device, decreasing the frequency of the cache in the device, decreasing the frequency of the memory in the device, and decreasing the duty cycle of the memory in the device.

In a possible implementation of the second aspect, the instruction delay-sensitive service includes one or more of the following: an e-commerce transaction service, a financial transaction service, an online education service, and a high-performance computing service. The cache bandwidth-sensitive service and the memory bandwidth-sensitive service include one or more of the following: a video-on-demand service, a big data read-write service, and a distributed storage service. The storage medium response delay-sensitive service includes one or more of the following: a data backup service, or a video data transmission service between a video surveillance camera and a storage device.

In a possible implementation of the second aspect, target resources required for running the service are distributed in a plurality of resource groups. Different resource groups include a same resource. The adjustment module is configured to adjust, at different amplitudes based on the different resource groups, a running parameter related to the target resource or an associated parameter associated with the running parameter related to the target resource.

In a possible implementation of the second aspect, the plurality of resource groups include a hot resource group and a warm resource group. Resource usage of the hot resource group is higher than resource usage of the warm resource group. The adjustment at different amplitudes includes: adjusting the running parameter related to the target resource or the running parameter related to the target resource, to adjust the hot resource group to improving the resource usage or maintaining the original resource usage, and adjust the warm resource group to reducing the resource usage.

Further, for the instruction delay-sensitive service, the target resource is a processor core in the device, and the adjustment at different amplitudes includes one or more of the following: increasing or skipping adjusting a frequency of a processor core in the hot resource group, and decreasing a frequency of a processor core in the warm resource group or a cold resource group. For the cache bandwidth-sensitive service, the target resource is a cache in the device, and the adjustment at different amplitudes includes one or more of the following: increasing or skipping adjusting a frequency of a cache in the hot resource group, and decreasing a frequency of a cache in the warm resource group. For the memory bandwidth-sensitive service, the target resource is a memory in the device, and the adjustment at different amplitudes includes one or more of the following: increasing or skipping adjusting a frequency of a memory in the hot resource group, increasing or skipping adjusting a duty cycle of the memory in the hot resource group, decreasing a frequency of a memory in the warm resource group, and decreasing a duty cycle of the memory in the warm resource group. For the storage medium response delay-sensitive service, the target resource is a storage medium in the device, and the adjustment at different amplitudes includes one or more of the following: maintaining a storage medium in the hot resource group in a working state, and setting a state of a storage medium in the warm resource group to a standby state.

Further, the plurality of resource groups include the cold resource group. Resource usage of the cold resource group is lower than the resource usage of the warm resource group. The adjustment at different amplitudes further includes: for the instruction delay-sensitive service, turning off a part of or all processor cores in the cold resource group; for the cache bandwidth-sensitive service, releasing a part of or all caches in the cold resource group; for the memory bandwidth-sensitive service, releasing a part of or all memories in the cold resource group; and for the storage medium response delay-sensitive service, setting a state of a storage medium in the cold resource group to an idle state.

In a possible implementation of the second aspect, the apparatus further includes an energy efficiency optimization module. The energy efficiency optimization module is configured to: adjust an adjustment amplitude of the selected running parameter or the associated parameter based on a difference between power consumption of the device after the adjustment and power consumption of the device before the adjustment and a difference between performance of the service after the adjustment and performance of the service before the, and readjust the selected running parameter or the associated parameter based on an adjusted adjustment amplitude. Power consumption of the device after the readjustment is lower than power consumption of the device before the readjustment, and the performance of the service is not affected after the readjustment.

In a possible implementation of the second aspect, the energy efficiency optimization module is further configured to: adjust a quantity of target resources in each resource group based on the difference, and adjust, at different amplitudes based on the different resource groups, an adjustment amplitude of the running parameter related to the target resource or the associated parameter associated with the running parameter related to the target resource.

In a possible implementation of the second aspect, the device includes at least one of a server (for example, an ARM server or an x86 server) and the storage medium (for example, an SSD or an HDD).

According to a third aspect, an embodiment of this application provides a computing device. The computing device includes a processor and a storage. The processor executes computer program code in the storage to implement a part or all of the method according to any one of the first aspect and the implementations of the first aspect.

According to a fourth aspect, an embodiment of this application provides a computer-readable storage medium. The computer-readable storage medium stores computer program code. When the computer program code is executed by a computing device, the computing device performs a part or all of the method according to any one of the first aspect and the implementations of the first aspect.

According to a fifth aspect, an embodiment of this application provides a computer program product. The computer program product may be software or a program product that includes instructions and that can run on a computing device or can be stored in any usable medium. When the computer program product runs on at least one computing device, the at least one computing device is enabled to perform a part or all of the method according to any one of the first aspect and the implementations of the first aspect.

### BRIEF DESCRIPTION OF DRAWINGS

FIG. 1 shows an application scenario of an energy efficiency management apparatus according to an embodiment of this application;
FIG. 2 shows another application scenario of an energy efficiency management apparatus according to an embodiment of this application;
FIG. 3 shows still another application scenario of an energy efficiency management apparatus according to an embodiment of this application;
FIG. 4 is a schematic flowchart of an energy efficiency management method according to an embodiment of this application;
FIG. 5 is a schematic flowchart of determining an energy efficiency policy A according to an embodiment of this application;
FIG. 6 is a schematic logical diagram of switching a target resource between a plurality of resource groups according to an embodiment of this application;
FIG. 7 is a schematic flowchart of adjusting an energy efficiency policy A according to an embodiment of this application;
FIG. 8 is a diagram of adjusting a frequency of a CPU in a device according to an embodiment of this application;
FIG. 9 is a diagram of adjusting a state of an SSD in a device according to an embodiment of this application;
FIG. 10 is a diagram of adjusting a duty cycle of a memory in a device according to an embodiment of this application;
FIG. 11 is a diagram of a structure of an energy efficiency management apparatus according to an embodiment of this application;
FIG. 12 is a diagram of a structure of a computing device according to an embodiment of this application; and
FIG. 13 is a diagram of a structure of a computing device system according to an embodiment of this application.

### DESCRIPTION OF EMBODIMENTS

With the burgeoning development of the IT industry, various IT devices (such as servers and hard disks) are upgraded at a fast pace. Currently, an IT device is mainly developed and designed in a trend of increasing a quantity of processor cores, increasing a frequency of the processor core, and increasing a storage capacity, which greatly improves performance of the IT device. However, at the same time, power consumption of the IT device also increases almost proportionally. In addition, the continuous increase in the power consumption of the IT device also puts greater pressure on heat dissipation and power supply of the device. Therefore, performing energy efficiency management on the IT device to reduce the power consumption of the IT device plays an important role in reducing carbon emissions of the device and implementing dual carbon goals.

To this end, an embodiment of this application provides an OS-based smart energy efficiency management (OSEEM) apparatus (referred to as an energy efficiency management apparatus below). The apparatus may detect a type of sensitivity of a service running in a device to a performance requirement, and formulate an energy efficiency policy suitable for the service based on the type of sensitivity, to perform energy efficiency management on the device without affecting performance of the service running in the device, thereby reducing power consumption of the device.

Devices that can perform energy efficiency management by using the energy efficiency management apparatus may include various IT devices, for example, a computing device, a storage device, and a network device. The computing device may include a server (for example, an ARM server or an x86 server), a virtual machine (virtual machine, VM), a container (container), a bare metal server (bare metal server, BMS), and the like. The storage device may include a storage medium, for example, a hard disk (for example, a solid-state drive (SSD) and a hard disk drive (HDD), a floppy disk, and a flash memory. The network device may include a router, a gateway, a switch, and the like. In addition, the foregoing device may be a terminal device, for example, a smartphone, a laptop computer, a tablet computer, a personal desktop computer, or an intelligent camera. The foregoing device may alternatively be an embedded system, for example, an embedded system on chip (SoC) or an embedded microcontroller unit (micro controller unit, MCU). The foregoing device may be further deployed in a cloud data center or an edge data center, for example, a server in the cloud data center or a device in a computing node cluster in the edge data center. The cloud data center includes a large quantity of basic resources (including computing resources, storage resources, and network resources) owned by a cloud service provider. In comparison with the cloud data center, the edge data center is closer to the terminal device and has fewer basic resources.

In specific implementation, the energy efficiency management apparatus may be a software apparatus, or may be a hardware device, or may be a combination of a software apparatus and a hardware device. For example, when the energy efficiency management apparatus is a software apparatus (for example, a software package), the device may implement energy efficiency management on the device by installing the energy efficiency management apparatus and running the energy efficiency management apparatus. It should be noted that, in this case, the energy efficiency management apparatus may run independently of an OS kernel of the device. In other words, the energy efficiency management apparatus does not depend heavily on the OS kernel of the device, and may be independently updated to match new software and hardware (including upgraded software and hardware) running on the device. This enables the energy efficiency management apparatus to be universal and compatible with a plurality of types of software and hardware platforms, so that the energy efficiency management apparatus can be used for energy efficiency management of a plurality of types of devices.

The following describes application scenarios of the energy efficiency management apparatus by using several specific examples.

Example 1: The energy efficiency management apparatus is configured to perform energy efficiency management on a laptop computer.

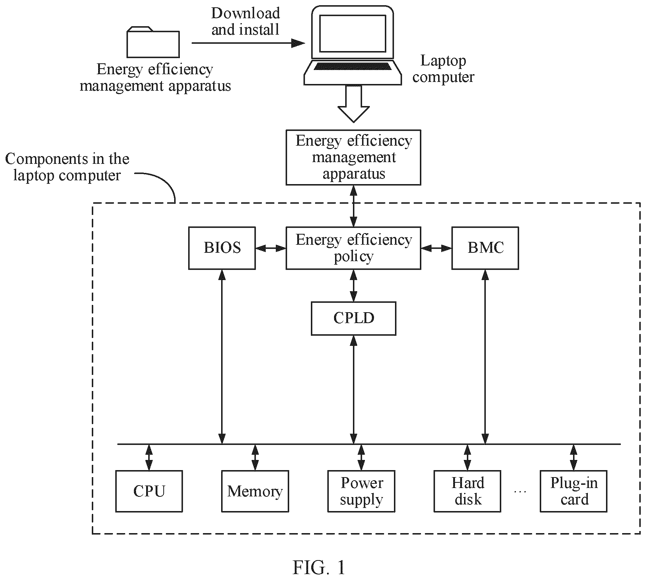

As shown in FIG. 1, the energy efficiency management apparatus is a software package, and the energy efficiency management apparatus is downloaded and installed on the laptop computer. When running on the laptop computer, the energy efficiency management apparatus can detect a type of sensitivity of a service running in the laptop computer to a performance requirement, formulate an energy efficiency policy suitable for the service based on the detected type of sensitivity, and indicate, according to the energy efficiency policy, at least one of a BIOS, a baseboard management controller (baseboard management controller, BMC), and a complex programmable logic device (complex programmable logic device, CPLD) on the laptop computer to adjust a parameter of a component (for example, a central processing unit (central processing unit, CPU), a memory, a power supply, a hard disk, or a plug-in card) in the laptop computer, thereby reducing power consumption of the laptop computer.

Example 2: The energy efficiency management apparatus is configured to perform energy efficiency management on a VM.

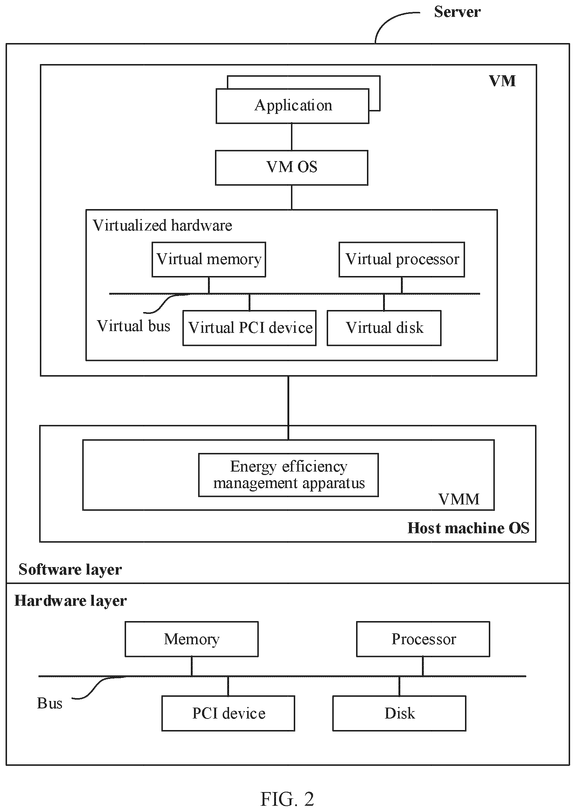

As shown in FIG. 2, a server (also referred to as a host machine) includes a hardware layer and a software layer. The hardware layer is a conventional configuration of the server, and may include a processor, a memory, a peripheral component interconnect (peripheral component interconnect, PCI) device, a disk, a bus, and the like. The PCI device may be a device, for example, a network interface card, a graphics processing unit (graphics processing unit, GPU), or an offload card, that can be inserted into a PCI slot or a peripheral component interconnect express (peripheral component interconnect express, PCIe) slot of the server. The software layer includes a VM deployed on the server. Various applications and an OS (that is, a VM OS) may run on the VM. The software layer further includes an OS (that is, a host machine OS) installed and running on the server. A virtual machine monitor (virtual machine monitor, VMM) (also referred to as a hypervisor) is disposed in the host machine OS. The VMM is responsible for managing the VM and is configured to implement computing virtualization (providing a processor and a memory of the server to the VM, that is, a virtual processor and a virtual memory), network virtualization (providing a part of functions of the network interface card to the VM, that is, a virtual PCI device), and storage virtualization (providing a part of disks to the VM, that is, a virtual disk) of the VM.

In this scenario, the energy efficiency management apparatus may be deployed on the VMM. In this way, when the VM runs, the energy efficiency management apparatus may detect a type of sensitivity of a service running in the VM to a performance requirement, formulate an energy efficiency policy suitable for the service based on the detected type of sensitivity, and indicate, according to the energy efficiency policy, at least one of a BIOS, a BMC, and a CPLD on the server to adjust a parameter of software or hardware (for example, the virtual processor, the virtual memory, the virtual PCI device, the virtual disk, or the VM OS) in the VM, thereby reducing power consumption of the VM.

Example 3: The energy efficiency management apparatus is configured to perform energy efficiency management on a device in a cluster (for example, a distributed storage system).

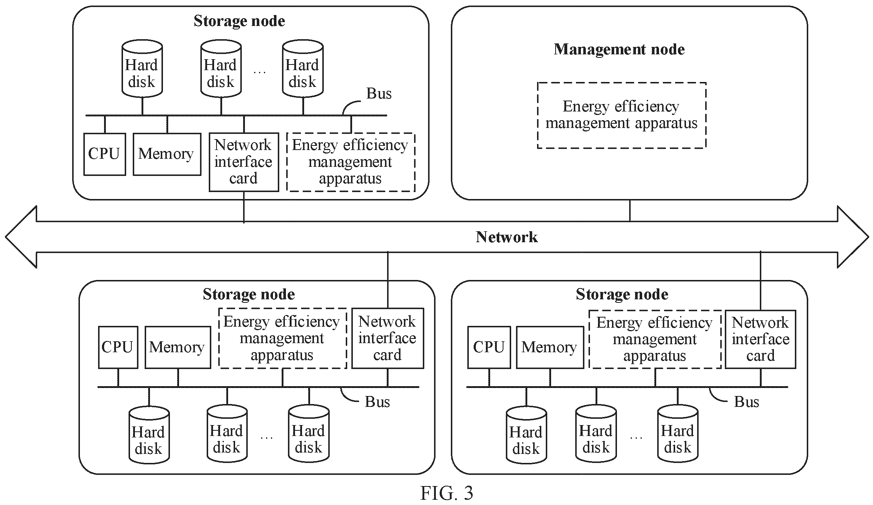

As shown in FIG. 3, the distributed storage system includes a plurality of storage nodes. The storage nodes may communicate with each other. Each storage node includes a CPU, a memory, a plurality of hard disks, a network interface card, and a bus. The CPU is configured to process a data access request from outside of the storage node (another storage node), and a request generated in the storage node. The CPU is further configured to perform calculation or processing on data, for example, deduplication and data check. The memory refers to an internal storage that directly exchanges data with the CPU, for example, a random access memory (random access memory, RAM) or a read-only memory (read-only memory, ROM). The memory can read and write data at any time and at a high speed. The memory is used as a temporary data storage of an OS or another running program. For example, when receiving a data write request, the CPU temporarily stores data in the data write request in the memory. When a total amount of data in the memory reaches a specific threshold, the CPU sends the data stored in the memory to the hard disk for persistent storage. The hard disk is configured to store data, and may be a magnetic disc or another type of storage medium, for example, an SSD or an HDD. The network interface card is configured to communicate with a device outside of the storage node. The bus is configured to connect the processor, the memory, the hard disk, and the network interface card.

Optionally, the distributed storage system further includes a management node. The management node may communicate with each storage node, and is configured to manage the foregoing storage nodes. In some embodiments, the management node may be a node that is selected from the plurality of storage nodes and that is configured to perform a management function.

In this scenario, the energy efficiency management apparatus may be deployed on the management node, or may be deployed on each storage node. When deployed on the management node, the energy efficiency management apparatus may detect a type of sensitivity of a service running on each storage node to a performance requirement, formulate an energy efficiency policy suitable for the service based on the type of sensitivity of each service, and indicate, according to the energy efficiency policy, at least one of a BIOS, a BMC, or a CPLD on a corresponding storage node to adjust a parameter of software or hardware (for example, the CPU, the memory, the network interface card, the hard disk, or the OS) on the storage node, thereby reducing power consumption of the storage node. When the energy efficiency management apparatus is deployed on each storage node, and one storage node is used as an example, the energy efficiency management apparatus may detect a type of sensitivity of a service running on the node to a performance requirement, formulate an energy efficiency policy suitable for the service based on the detected type of sensitivity, and indicate, according to the energy efficiency policy, at least one of a BIOS, a BMC, and a CPLD on the storage node to adjust a parameter of software or hardware (for example, the CPU, the memory, the network interface card, the hard disk, or the OS) on the storage node, thereby reducing power consumption of the storage node.

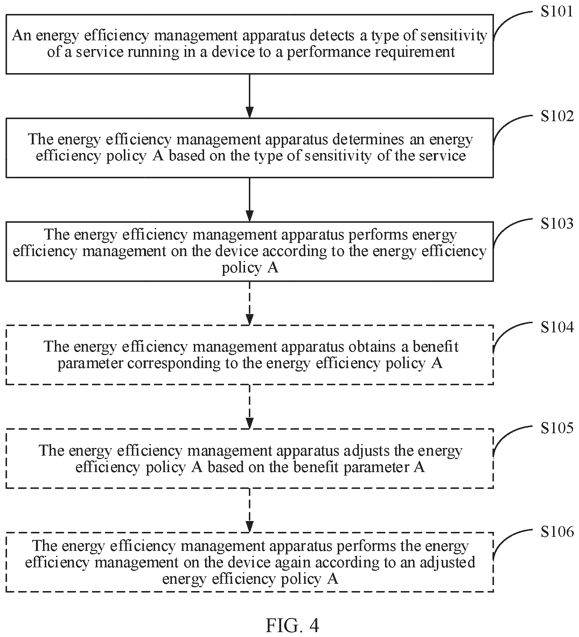

The following describes in detail functions of the energy efficiency management apparatus with reference to a schematic flowchart of an energy efficiency management method shown in FIG. 4.

S101: An energy efficiency management apparatus detects a type of sensitivity of a service running in a device to a performance requirement.

The type of sensitivity of the service to the performance requirement (referred to as the type of sensitivity of the service below) indicates which resource or resources in a device running the service are sensitive to performance of the service, to be specific, which resource or resources in a plurality of resources required for running the service cause a great change to the performance of the service when the resource or the resources change slightly. Optionally, the resource in the device includes one or more of the following: a processor (for example, a processor core in the processor), a cache, a memory, a storage medium (for example, a hard disk (for example, an SSD or an HDD), a floppy disk, or a flash memory), a network interface card, and the like. Correspondingly, the plurality of resources required for running the service include one or more of the foregoing processor, cache, memory, storage medium, network interface card, and the like.

In the current device, the processor, the cache, the memory, and the hard disk are main power-consuming components. Therefore, this embodiment of this application mainly focuses on how to reduce power consumption of these components to implement energy efficiency management on the device. Correspondingly, division of services by type of sensitivity is based on the four components. For example, the type of sensitivity of the service includes one or more of the following: an instruction delay-sensitive service, a cache bandwidth-sensitive service, a memory bandwidth-sensitive service, and a storage medium response delay-sensitive service. The following describes types of sensitivity of the four services:

The instruction delay-sensitive service is a service that is sensitive to a response delay of instruction processing. The response delay of instruction processing is a time difference between time at which the processor delivers an instruction and time at which the processor starts to execute the instruction. The "being sensitive to a response delay of instruction processing" may be understood as follows: When a device runs the service, if the response delay of instruction processing changes slightly, performance of the service changes greatly. Particularly when the response delay of instruction processing is greater than first time, if a change in the performance of the service cannot meet a performance requirement expected by a user, it indicates that the service is sensitive to the response delay of instruction processing, in other words, the type of sensitivity of the service is the instruction delay-sensitive service. It can be learned from the foregoing features that the instruction delay-sensitive service includes one or more of the following: an e-commerce transaction service, a financial transaction service, an online education service, and a high-performance computing service.

The cache bandwidth-sensitive service is a service that is sensitive to a cache bandwidth in a device. The "being sensitive to a cache bandwidth in a device" may be understood as follows: When the device runs the service, if the cache bandwidth in the device changes slightly, performance of the service changes greatly. Particularly when the cache bandwidth in the device is less than a first bandwidth, if the performance of the service cannot meet a performance requirement expected by a user, the service is sensitive to the cache bandwidth in the device, in other words, the type of sensitivity of the service is the cache bandwidth-sensitive service. It can be learned from the foregoing features that the cache bandwidth-sensitive service includes one or more of the following: a video-on-demand service, a big data read-write service, and a distributed storage service.

The memory bandwidth-sensitive service is a service that is sensitive to a memory bandwidth in a device. The "being sensitive to a memory bandwidth in a device" may be understood as follows: When the device runs the service, if the memory bandwidth in the device changes slightly, performance of the service changes greatly. Particularly when the memory bandwidth in the device is less than a second bandwidth, if the performance of the service cannot meet a performance requirement expected by a user, the service is sensitive to the memory bandwidth in the device, in other words, the type of sensitivity of the service is the memory bandwidth-sensitive service. It can be learned from the foregoing features that the memory bandwidth-sensitive service includes one or more of the following: a video-on-demand service, a big data read-write service, and a distributed storage service.

The storage medium response delay-sensitive service is a service that depends on access to a storage medium in a device and is sensitive to a response delay of the storage medium in the device. The storage medium in the device includes a hard disk (for example, an SSD or an HDD), a floppy disk, a flash memory, and the like. The response delay of the storage medium is a time difference between time at which the storage medium receives a data access instruction and time at which the storage medium processes the data access instruction. The data access instruction herein may be an instruction that instructs to read data from the storage medium, or an instruction that indicates to write data into the storage medium. Correspondingly, that the storage medium processes the data access instruction may be reading data from the storage medium, or writing data into the storage medium. The "being sensitive to a response delay of the storage medium in the device" may be understood as follows: When the device runs the service, if the response delay of the storage medium in the device changes slightly, performance of the service changes greatly. Particularly when the response delay of the storage medium in the device is greater than second time, if the performance of the service cannot meet a performance requirement expected by a user, it indicates that the service is sensitive to the response delay of the storage medium, in other words, the type of sensitivity of the service is the storage medium response delay-sensitive service. It can be learned from the foregoing features that the storage medium response delay-sensitive service includes one or more of the following: a data backup service, and a video data transmission service between a video surveillance camera and a storage device.

It should be noted that the foregoing description relates to the first time, the second time, the first bandwidth, the second bandwidth, and the performance loss requirement. In this embodiment of this application, the first time, the second time, the first bandwidth, the second bandwidth, and the performance loss requirement may all be preset by a user, or may be dynamically adjusted by the energy efficiency management apparatus based on an actual situation.

It should be further noted that the types of sensitivity of the four services are merely examples. In specific implementation, there may be another type of sensitivity, provided that the division is based on another power-consuming component (for example, a power supply or a plug-in card) in the device, a user requirement, or a service requirement. An example in which the plug-in card is a GPU is used. If power consumption of the GPU needs to be reduced, the type of sensitivity of the service may include a high-concurrency-sensitive service, where the high-concurrency-sensitive service is a service that is sensitive to a quantity of requests that can be concurrently processed by the GPU. In other words, when a device runs the service, if the quantity of requests that can be concurrently processed by the GPU in the device changes slightly, performance of the service changes greatly.

Specifically, the energy efficiency management apparatus may detect, in any one or more of the following manners, the type of sensitivity of the service running in the device:

Manner 1: The energy efficiency management apparatus obtains a plurality of running parameters of the device, and detects, based on the plurality of running parameters of the device, the type of sensitivity of the service running in the device.

The plurality of running parameters of the device represent a state of the device when the device runs a service, and the running parameters of the device may include a software or hardware parameter and an OS parameter in the device. For example, the software or hardware parameter in the device may include one or more of the following: a power load percentage in the device (to be specific, a ratio of total power consumed by load in the device to total power output by the power supply), power of one or more components in the device, a rotational speed of a fan in the device, a frequency of a processor core in the device (to be specific, the frequency of the processor core in the device when the processor core executes a service, for example, a CPU frequency), and a frequency of a cache in the device, a cache hit rate (to be specific, a ratio of a quantity of data hits by the CPU to a quantity of data accesses by the CPU, where the quantity of data accesses by the CPU is a sum of the quantity of data hits by the CPU and a quantity of data misses by the CPU, the quantity of data hits by the CPU is a quantity of data obtained from a cache when the CPU accesses data, and the quantity of data misses by the CPU is a quantity of data not obtained from the cache when the CPU accesses data) of the cache in the device, a last level cache miss rate (LLC miss rate) (to be specific, a ratio of the quantity of data misses by the CPU to the quantity of data accesses by the CPU) of the cache in the device, a frequency of a flash memory in the device, a refresh frequency of a memory in the device, a motor rotational speed of a storage medium in the device, data collected by an underlying register (for example, a model specific register (model specific register, MSR) or a hard disk smart register) in the device, a model and a quantity of components in the device, and the like. The OS parameter in the device may include one or more of the following: a clock cycle, a quantity of clock cycles, and a quantity of instructions per clock (IPC), a state (including an on state, an off state, and a standby state) of a processor core in a processor in the device, usage (for example, CPU core usage (CPU core usage)) of the processor core in the processor in the device, a branch miss rate (branch miss rate) (to be specific, a run instruction branch miss rate of the processor core) of the processor core in the processor in the device, a bandwidth of the cache in the device, and whether the CPU in the device performs a cache prefetching operation (to be specific, transferring a fetched object of the CPU from a memory to the cache), a state (including an on state and an off state) of a memory module in the memory in the device, a bandwidth of the memory in the device, a duty cycle (to be specific, a ratio of time the memory spends in processing a service or space the memory uses to process a service to the clock cycle) of the memory in the device, a state (including a working state, an idle state, and a standby state) of a storage medium in the device, usage of the storage medium in the device, a quantity of input/output operations per second (IOPS) of the storage medium in the device, usage of a network interface card in the device, and the like.

In some embodiments, the energy efficiency management apparatus may obtain a plurality of running parameters of the device in a plurality of manners. For example, the software and hardware and the OS in the device collect the plurality of running parameters of the device in real time or periodically, and then send the collected plurality of running parameters to the energy efficiency management apparatus, so that the energy efficiency management apparatus obtains the plurality of running parameters of the device. For another example, after collecting the plurality of running parameters of the device in real time or periodically, the software and hardware and the OS first store the plurality of running parameters into a storage (for example, a hard disk or a memory) in the device, and then, the energy efficiency management apparatus obtains the plurality of running parameters of the device from the storage.

In some embodiments, that the energy efficiency management apparatus determines, based on the plurality of running parameters of the device, the type of sensitivity of the service running in the device includes: The energy efficiency management apparatus obtains, based on the plurality of running parameters of the device, a feature of the service running in the device, and then determines the type of sensitivity of the service based on the feature of the service.

The types of sensitivity of the foregoing four services are still used as an example. ① A feature of the instruction delay-sensitive service is that the service is sensitive to the response delay of instruction processing, and a running parameter related to the feature may include a quantity, a frequency, usage, a branch miss rate, and the like of processor cores required for running the service. Therefore, the energy efficiency management apparatus may determine, based on these running parameters, whether the service running in the device is sensitive to the response delay of instruction processing, to determine whether the type of sensitivity of the service is the instruction delay-sensitive service. ② A feature of the cache bandwidth-sensitive service is that the service is sensitive to the cache bandwidth in the device, and a running parameter related to the feature may include a bandwidth and a frequency of a cache required for running the service, whether the CPU in the device performs the cache prefetching operation on some caches, and the like. Therefore, the energy efficiency management apparatus may determine, based on these running parameters, whether the service running in the device is sensitive to the cache bandwidth in the device, to determine whether the type of sensitivity of the service is the cache bandwidth-sensitive service. ③ A feature of the memory bandwidth-sensitive service is that the service is sensitive to the memory bandwidth in the device, and a parameter related to the feature may include a bandwidth, a duty cycle, and a frequency of a memory required for running the service, a quantity of refresh times of the memory, and the like. Therefore, the energy efficiency management apparatus may determine, based on these running parameters, whether the service running in the device is sensitive to the memory bandwidth in the device, to determine whether the type of sensitivity of the service is the memory bandwidth-sensitive service. ④ A feature of the storage medium response delay-sensitive service is that the service is sensitive to the response delay of the storage medium in the device, and a running parameter related to the feature may include a state of the storage medium required for running the service, usage, the motor rotational speed, a quantity of refresh times, and the IOPS that are of the storage medium, and the like. Therefore, the energy efficiency management apparatus may determine, based on these running parameters, whether the service running in the device is sensitive to the response delay of the storage medium in the device, to determine whether the type of sensitivity of the service is the storage medium response delay-sensitive service.

Optionally, the plurality of running parameters of the device include a plurality of running parameters required for running the service. The plurality of running parameters required for running the service are parameters related to running of the service, and may specifically include parameters corresponding to a plurality of resources required for running the service. For example, the plurality of resources required for running the service include a processor core and a memory. In this case, the plurality of running parameters required for running the service may include the quantity, the frequency, the usage, and the branch miss rate of the processor cores required for running the service, the bandwidth, the duty cycle, and the frequency of the memory required for running the service, and the quantity of refresh times of the memory.

It should be understood that, in specific implementation, the plurality of resources required for running the service are a part or all of the plurality of resources included in the device. Therefore, in addition to the parameters related to running of the service (that is, the plurality of running parameters required for running the service), the plurality of running parameters of the device may further include a parameter irrelevant to running of the service. For example, resources in the device include a processor, a memory, and a hard disk, and the plurality of running parameters of the device may include a frequency of the processor, a bandwidth of the memory, and an IOPS of the hard disk. However, if the service running in the device needs the processor and the memory, but does not need the hard disk, the frequency of the processor and the bandwidth of the memory are the parameters related to running of the service, and the IOPS of the hard disk is the parameter irrelevant to running of the service. It can be learned from the related descriptions of the type of sensitivity of the service that the type of sensitivity of the service is a resource that is determined by the energy efficiency management apparatus from the plurality of resources required for running the service and that is sensitive to a performance requirement of the service, and depends on the plurality of running parameters required for running the service. Therefore, that the energy efficiency management apparatus obtains a plurality of running parameters of the device, and detects, based on the plurality of running parameters of the device, the type of sensitivity of the service running in the device includes: The energy efficiency management apparatus obtains the plurality of running parameters required for running the service, and then detects the type of sensitivity of the service based on the plurality of running parameters required for running the service. In this way, the energy efficiency management apparatus does not need to obtain the parameter irrelevant to running of the service, thereby improving efficiency of energy efficiency management.

In addition, when the plurality of running parameters of the device include the parameter irrelevant to running of the service, the selected running parameter may include the parameter irrelevant to running of the service. In this case, by adjusting a parameter corresponding to a resource not required for running the service, power consumption of the resource may also be reduced, thereby reducing power consumption of the device. The foregoing example is still used for description. Resources in the device include the processor, the memory, and the hard disk, and the processor and the memory are required for running the service. Therefore, power consumption of the hard disk in the device may be reduced by adjusting a parameter (for example, the IOPS) related to the hard disk in the device, thereby reducing the power consumption of the device.

Manner 2: The device stores a label used to identify the type of sensitivity of the service running in the device, and therefore, the energy efficiency management apparatus may detect the type of sensitivity of the service running in the device by obtaining the label.

The label may be set by a user based on a specific status (for example, a performance requirement expected by the user) of the service, or determined by the device based on a running status (for example, the plurality of running parameters required for running the service) of the service in a process of running the service. When the label is determined by the device based on the plurality of running parameters required for running the service, a process in which the device determines the label may be similar to a process in which the energy efficiency management apparatus detects, based on the plurality of running parameters required for running the service, the type of sensitivity of the service running in the device in the manner 1, and therefore, this process is not described in detail again.

S102: The energy efficiency management apparatus determines an energy efficiency policy A based on the type of sensitivity of the service.

Specifically, the energy efficiency management apparatus selects, based on the type of sensitivity of the service, a part of the plurality of running parameters of the device and at least one of associated parameters associated with the selected running parameters, and then determines an adjustment amplitude of the selected running parameters and the at least one of associated parameters, to determine the energy efficiency policy A. Both the selected running parameters and the associated parameters are parameters with low relevance to the type of sensitivity of the service. The low relevance herein may be understood as that when the selected running parameter or the associated parameter changes, performance of the service is not affected or slightly affected. More specifically, when the selected running parameter or the associated parameter changes, a performance change of the service meets a performance loss requirement, where the performance loss requirement may be a change range that can be supported by the performance of the service. Once the performance change of the service exceeds the range, the performance of the service is evidently affected. For example, for an online education service, if the performance change of the service exceeds the change range that can be supported by the service, an intermittent stop may occur during a teaching process. In the following, the types of sensitivity of the foregoing four services are still used to explain the "low relevance."

For the instruction delay-sensitive service, the selected running parameter or the associated parameter is a parameter corresponding to a resource that has no impact on the response delay of instruction processing or has little impact on the response delay of instruction processing in a plurality of resources required for running the service. It should be understood that the response delay of instruction processing depends on instruction processing efficiency, and the instruction processing efficiency depends on a frequency of a processor core configured to process the instruction. In other words, the plurality of resources required for running the instruction delay-sensitive service include the processor core (the processor core required for running the service is referred to as a first processor core below), and the frequency of the first processor core is a running parameter with high relevance to the response delay of instruction processing. In this case, the selected running parameter or the associated parameter may include one or more of the following: another parameter corresponding to the first processor core other than the frequency of the first processor core, and a parameter corresponding to another resource other than the first processor core in the device. For example, the another parameter corresponding to the first processor core includes one or more of the following: a voltage of the first processor core, whether the first processor core performs a cache prefetching operation, and the like. The parameter corresponding to the another resource other than the first processor core in the device includes one or more of the following: a parameter corresponding to a second processor core in the device, a parameter corresponding to a cache in the device, a parameter corresponding to a memory in the device, a parameter corresponding to a storage medium in the device, and the like. The second processor core is a processor core that is in the device and that is not configured to run the instruction delay-sensitive service. The parameter corresponding to the second processor core includes one or more of the following: a frequency of the second processor core, a state of the second processor core, a voltage of the second processor core, whether the second processor core performs a cache prefetching operation, and the like. The parameter corresponding to the cache in the device includes one or more of the following: a frequency of the cache in the device and whether a CPU in the device performs a cache prefetching operation. The parameter corresponding to the memory in the device includes one or more of the following: a frequency of the memory in the device, a duty cycle of the memory in the device, a refresh frequency of the memory in the device, and a state of a memory module in the memory in the device. The parameter corresponding to the storage medium in the device includes one or more of the following: a state of the storage medium in the device, a motor rotational speed of the storage medium in the device, and a refresh frequency of the storage medium in the device.

For the cache bandwidth-sensitive service, the selected running parameter or the associated parameter is a parameter corresponding to a resource that has no impact on the cache bandwidth in the device or has little impact on the cache bandwidth in the device in a plurality of resources required for running the service. It should be understood that the cache bandwidth is affected by one or more of the following factors: a frequency of a cache and whether a CPU performs a cache prefetching operation. In other words, the plurality of resources required for running the cache bandwidth-sensitive service include the cache (the cache required for running the service is referred to as a first cache below), and the frequency of the first cache and whether the CPU performs the cache prefetching operation on the first cache are both running parameters with high relevance to the bandwidth of the first cache. In this case, the selected running parameter or the associated parameter may include a parameter corresponding to another resource other than the first cache in the device. For example, the parameter corresponding to the another resource other than the first cache in the device includes one or more of the following: a parameter corresponding to a second cache in the device, a parameter corresponding to a processor core in the device, a parameter corresponding to a memory in the device, a parameter corresponding to a storage medium in the device, and the like. The second cache is a cache that is in the device and that is not used to run the cache bandwidth-sensitive service. The parameter corresponding to the second cache includes one or more of the following: a frequency of the second cache, whether the CPU in the device performs the cache prefetching operation on the second cache, and the like. The parameter corresponding to the processor core in the device includes one or more of the following: a frequency of the processor core in the device, a state of the processor core in the device, a voltage of the processor core in the device, whether the processor core (that is, a CPU core) in the device performs a cache prefetching operation, and the like. The parameter corresponding to the memory in the device includes one or more of the following: a frequency of the memory in the device, a duty cycle of the memory in the device, a refresh frequency of the memory in the device, and a state of a memory module in the memory in the device. The parameter corresponding to the storage medium in the device includes one or more of the following: a state of the storage medium in the device, a motor rotational speed of the storage medium in the device, and a refresh frequency of the storage medium in the device.

For the memory bandwidth-sensitive service, the selected running parameter or the associated parameter is a parameter corresponding to a resource that has no impact on the memory bandwidth in the device or has little impact on the memory bandwidth in the device in a plurality of resources required for running the service. It should be understood that the memory bandwidth is affected by one or more of the following factors: a frequency of a memory, a duty cycle of the memory, a refresh frequency of the memory, and a state of a memory module in the memory. In other words, the plurality of resources required for running the memory bandwidth-sensitive service include the memory (the memory required for running the service is referred to as a first memory below), and the frequency of the first memory, the duty cycle of the first memory, the refresh frequency of the first memory, and the state of the memory module in the first memory are all running parameters with high relevance to the bandwidth of the first memory. In this case, the selected running parameter or the associated parameter may include a parameter corresponding to another resource in the device other than the first memory. For example, the parameter corresponding to the another resource in the device other than the first memory includes one or more of the following: a parameter corresponding to a second memory in the device, a parameter corresponding to a processor core in the device, a parameter corresponding to a cache in the device, a parameter corresponding to a storage medium in the device, and the like. The second memory is a memory that is in the device and that is not configured to run the memory bandwidth-sensitive service. The parameter corresponding to the second memory includes one or more of the following: a frequency of the second memory, a duty cycle of the second memory, a refresh frequency of the second memory, a state of a memory module in the second memory, and the like. The parameter corresponding to the processor core in the device includes one or more of the following: a frequency of the processor core in the device, a state of the processor core in the device, a voltage of the processor core in the device, whether the processor core (that is, a CPU core) in the device performs a cache prefetching operation, and the like. The parameter corresponding to the cache in the device includes one or more of the following: a frequency of the cache in the device and whether a CPU in the device performs a cache prefetching operation. The parameter corresponding to the storage medium in the device includes one or more of the following: a state of the storage medium in the device, a motor rotational speed of the storage medium in the device, and a refresh frequency of the storage medium in the device.

For the storage medium response delay-sensitive service, the selected running parameter or the associated parameter is a parameter corresponding to a resource that has no impact on the response delay of the storage medium in the device or has little impact on the response delay of the storage medium in the device in a plurality of resources required for running the service. It should be understood that the response delay of the storage medium is affected by one or more of the following factors: a state of the storage medium, a motor rotational speed of the storage medium, and a refresh frequency of the storage medium. In other words, the plurality of resources required for running the storage medium response delay-sensitive service include the storage medium (the storage medium required for running the service is referred to as a first storage medium below), and the state of the first storage medium, the motor rotational speed of the first storage medium, and the refresh frequency of the first storage medium are all running parameters with high relevance to the response delay of the first storage medium. In this case, the selected running parameter or the associated parameter may include a parameter corresponding to another resource in the device other than the first storage medium. For example, the parameter corresponding to the another resource in the device other than the first storage medium includes one or more of the following: a parameter corresponding to a second storage medium in the device, a parameter corresponding to a processor core in the device, a parameter corresponding to a cache in the device, a parameter corresponding to a memory in the device, and the like. The second storage medium is a storage medium that is in the device and that is not configured to run the storage medium response delay-sensitive service. The parameter corresponding to the second storage medium includes one or more of the following: a state of the second storage medium, a motor rotational speed of the second storage medium, a refresh frequency of the second storage medium, and the like. The parameter corresponding to the processor core in the device includes one or more of the following: a frequency of the processor core in the device, a state of the processor core in the device, a voltage of the processor core in the device, whether the processor core (that is, a CPU core) in the device performs a cache prefetching operation, and the like. The parameter corresponding to the cache in the device includes one or more of the following: a frequency of the cache in the device and whether a CPU in the device performs a cache prefetching operation. The parameter corresponding to the memory in the device includes one or more of the following: a frequency of the memory in the device, a duty cycle of the memory in the device, a refresh frequency of the memory in the device, and a state of a memory module in the memory in the device.

After determining the selected running parameters and the at least one of associated parameters, the energy efficiency management apparatus may set a corresponding adjustment amplitude for each of these parameters. When the adjustment amplitude for each parameter is set, it should be ensured that after the parameter is adjusted based on the adjustment amplitude, power consumption of the device can be reduced, and performance of the service running in the device can meet a performance requirement expected by a user. The types of sensitivity of the foregoing four services are still used as an example for description.

For the instruction delay-sensitive service, the energy efficiency management apparatus may set one or more of the following: a decrease amplitude of the voltage of the first processor core or the second processor core, setting a part of first processor cores to an off state or a standby state, configuring the first processor core or the second processor core to not performing the cache prefetching operation, a decrease amplitude of the frequency of the second processor core, and setting a state of a part of or all second processor cores to an off state or a standby state; a decrease amplitude of the frequency of the cache in the device, and releasing the cache in the device; a decrease amplitude of the duty cycle of the memory in the device, a decrease amplitude of the frequency of the memory in the device, a decrease amplitude of the refresh frequency of the memory in the device, and setting a state of a part of or all memory modules in the device to an off state; and a decrease amplitude of the motor rotational speed of the storage medium in the device, a decrease amplitude of the refresh frequency of the storage medium in the device, and setting a state of a part of or all storage media to an idle state, a standby state, or an off state.

For the cache bandwidth-sensitive service, the energy efficiency management apparatus may set one or more of the following: a decrease amplitude of the frequency of the second cache, configuring the second cache to not supporting the cache prefetching operation, and releasing the second cache; a decrease amplitude of the frequency of the processor core in the device, a decrease amplitude of the voltage of the processor core in the device, and setting a part of or all processor cores in the device to an off state or a standby state; a decrease amplitude of the duty cycle of the memory in the device, a decrease amplitude of the frequency of the memory in the device, a decrease amplitude of the refresh frequency of the memory in the device, and setting a state of a part of or all memory modules in the device to an off state; and a decrease amplitude of the motor rotational speed of the storage medium in the device, a decrease amplitude of the refresh frequency of the storage medium in the device, and setting a state of a part of or all storage media to an idle state, a standby state, or an off state.

For the memory bandwidth-sensitive service, the energy efficiency management apparatus may set one or more of the following: a decrease amplitude of the duty cycle of the second memory, a decrease amplitude of the frequency of the second memory, a decrease amplitude of the refresh frequency of the second memory, and setting a state of a part of or all memory modules in the second memory to an off state; a decrease amplitude of the frequency of the processor core in the device, a decrease amplitude of the voltage of the processor core in the device, and setting a part of or all processor cores in the device to an off state or a standby state; and a decrease amplitude of the frequency of the cache in the device, a decrease amplitude of the motor rotational speed of the storage medium in the device, a decrease amplitude of the refresh frequency of the storage medium in the device, and setting a state of a part of or all storage media to an idle state, a standby state, or an off state.

For the storage medium response delay-sensitive service, the energy efficiency management apparatus may set one or more of the following: a decrease amplitude of the motor rotational speed of the second storage medium, a decrease amplitude of the refresh frequency of the second storage medium, and setting the state of the second storage medium to an idle state, a standby state, or an off state; a decrease amplitude of the frequency of the processor core in the device, a decrease amplitude of the voltage of the processor core in the device, and setting a part of or all processor cores in the device to an off state or a standby state; a decrease amplitude of the frequency of the cache in the device, and releasing the cache in the device; and a decrease amplitude of the duty cycle of the memory in the device, a decrease amplitude of the frequency of the memory in the device, a decrease amplitude of the refresh frequency of the memory in the device, and setting a state of a part of or all memory modules in the device to an off state.

In some embodiments, the energy efficiency management apparatus may determine adjustment amplitudes of the selected running parameters and the at least one of associated parameters in the following manner: The energy efficiency management apparatus inputs the selected running parameters and the at least one of associated parameters into a performance evaluation model, and obtains, by learning based on the performance evaluation model, the adjustment amplitude corresponding to the input at least one parameter. The performance evaluation model may be obtained by training a first training set by using one or more algorithms. The algorithms may include a support vector regression (support vector regression, SVR) algorithm, unary linear regression (unary linear regression, ULR), a logistic regression algorithm, a back propagation (back propagation, BP) neural network, a convolutional neural network (convolutional neural network, CNN), and the like. The first training set may include a plurality of running parameters of the device in a historical time period and an adjustment amplitude of each parameter, or a plurality of running parameters of another device running the foregoing service in a historical time period and an adjustment amplitude of each parameter.

S103: The energy efficiency management apparatus performs energy efficiency management on the device according to the energy efficiency policy A.

Specifically, the energy efficiency management apparatus adjusts the selected running parameters and the at least one of associated parameters according to the energy efficiency policy A.

Further, the energy efficiency management apparatus sends an adjustment instruction to a control apparatus in the device according to the energy efficiency policy A, where the adjustment instruction includes one or more of the following: the selected running parameter and an adjustment amplitude corresponding to the selected running parameter, and the associated parameter and an adjustment amplitude corresponding to the associated parameter, and the control apparatus in the device includes one or more of a BIOS, a BMC, and a CPLD. Correspondingly, after receiving the adjustment instruction from the energy efficiency management apparatus, the control apparatus in the device adjusts the selected running parameters and the at least one of associated parameters by parsing the adjustment instruction, to reduce the power consumption of the device.

Adjustment amplitudes of parameters related to the types of sensitivity of the four services in S102 are used as an example.

For the instruction delay-sensitive service, the energy efficiency management apparatus may perform one or more of the following operations according to the energy efficiency policy A: decreasing the voltage of the first processor core or the second processor core, set a part of the first processor cores to the off state or the standby state, configuring the first processor core or the second processor core to not performing the cache prefetching operation, decreasing the frequency of the second processor core, and setting the state of a part of or all second processor cores to the off state or the standby state; decreasing the frequency of the cache in the device, and releasing the cache in the device; decreasing the duty cycle of the memory in the device, decreasing the frequency of the memory in the device, decreasing the refresh frequency of the memory in the device, and setting the state of a part of or all memory modules in the device to the off state; and decreasing the motor rotational speed of the storage medium in the device, decreasing the refresh frequency of the storage medium in the device, and setting the state of a part of or all storage media to the idle state, the standby state, or the off state. In this way, power consumption of the second processor core in the device can be reduced without affecting performance of the instruction delay-sensitive service, and at least one of the resources, that is, the first processor core, the cache, the memory, and the storage medium in the device, occupied by the service can be reduced, thereby reducing the power consumption of the device.

For the cache bandwidth-sensitive service, the energy efficiency management apparatus may perform one or more of the following according to the energy efficiency policy A: decreasing the frequency of the second cache, configuring the second cache to not supporting the cache prefetching operation, and releasing the second cache; decreasing the frequency of the processor core in the device, decreasing the voltage of the processor core in the device, and setting a part of or all processor cores in the device to the off state or the standby state; decreasing the duty cycle of the memory in the device, decreasing the frequency of the memory in the device, decreasing the refresh frequency of the memory in the device, and setting the state of a part of or all memory modules in the device to the off state; and decreasing the motor rotational speed of the storage medium in the device, decreasing the refresh frequency of the storage medium in the device, and setting the state of a part of or all storage media to the idle state, the standby state, or the off state. In this way, power consumption of the second cache in the device can be reduced without affecting performance of the cache bandwidth-sensitive service, and at least one of the resources, that is, the processor core, the memory, and the storage medium in the device, occupied by the service can be reduced, thereby reducing the power consumption of the device.

For the memory bandwidth-sensitive service, the energy efficiency management apparatus may perform one or more of the following according to the energy efficiency policy A: decreasing the duty cycle of the second memory, decreasing the frequency of the second memory, decreasing the refresh frequency of the second memory, and setting the state of a part of or all memory modules in the second memory to the off state; decreasing the frequency of the processor core in the device, decreasing the voltage of the processor core in the device, and setting a part of or all processor cores in the device to the off state or the standby state; decreasing the frequency of the cache in the device, and releasing the cache in the device; and decreasing the motor rotational speed of the storage medium in the device, decreasing the refresh frequency of the storage medium in the device, and setting the state of a part of or all storage media to the idle state, the standby state, or the off state. In this way, power consumption of the second memory in the device can be reduced without affecting performance of the memory bandwidth-sensitive service, and at least one of the resources, that is, the processor core, the cache, and the storage medium in the device, occupied by the service can be reduced, thereby reducing the power consumption of the device.

For the storage medium response delay-sensitive service, the energy efficiency management apparatus may perform one or more of the following according to the energy efficiency policy A: decreasing the motor rotational speed of the second storage medium, decreasing the refresh frequency of the second storage medium, and setting the state of the second storage medium to the idle state, the standby state, or the off state; decreasing the frequency of the processor core in the device, decreasing the voltage of the processor core in the device, and setting a part of or all processor cores in the device to the off state or the standby state; decreasing the frequency of the cache in the device, and releasing the cache in the device; and decreasing the duty cycle of the memory in the device, decreasing the frequency of the memory in the device, decreasing the refresh frequency of the memory in the device, and setting the state of a part of or all memory modules in the device to the off state. In this way, power consumption of the second storage medium in the device can be reduced without affecting performance of the storage medium response delay-sensitive service, and at least one of the resources, that is, the processor core, the cache, and the memory in the device, occupied by the service can be reduced, thereby reducing the power consumption of the device.

Further, considering that in actual application, load of the service running in the device may fluctuate, this embodiment of this application proposes that the energy efficiency policy A needs to be adapted to a load change of the service running on the device, in other words, the energy efficiency management apparatus needs to perform energy efficiency management on the device based on a load status of the service running in the device. In this way, performance of the service is not affected, and the power consumption of the device can be reduced as much as possible. A reason is as follows:
① In case of a sharp increase in the load of the service, if an energy efficiency policy before the sharp increase is still used to perform energy efficiency management on the device, the performance of the service may be affected.
   For example, it is assumed that the device includes a processor core 1, a processor core 2, and a processor core 3, and the load of the service running in the device at a moment T1 is low. In this case, the power consumption of the device may be reduced by turning off the processor core 1 and the processor core 2 in the device. In other words, the remaining processor core (that is, the processor core 3) in a running state in the device can meet a performance requirement of the service. After a period of time, the load of the service increases sharply. In this case, if the previous energy efficiency policy A is still used, the processor core 3 is still the only processor core in the working state in the device. This may cause a case in which the service cannot be processed in time, thereby affecting the performance of the service. On the contrary, if the energy efficiency policy A can adapt to a sharp increase in the load of the service, the device may be indicated to turn on the processor core 1 in advance before the load of the service is about to increase sharply, so that the processor core 1 and the processor core 2 can process the service at the same time. In this way, the performance of the service is not affected.
② In case of a sharp decrease in the load of the service, if an energy efficiency policy before the sharp decrease is still used to perform energy efficiency management on the device, a resource of the device may be wasted, thereby resulting in an unnecessary power loss.

For example, it is assumed that the device includes a processor core 1, a processor core 2, and a processor core 3, and the service running in the device at a moment T2 needs to be processed by the processor core 1 and the processor core 2 at the same time to meet a performance requirement of the service. In this case, the power consumption of the device may be reduced by turning off the processor core 3. After a period of time, the load of the service decreases sharply. In this case, only the processor core 1 may be needed to process the service. However, if the previous energy efficiency policy A is still used, the processor core 2 is in an idle state. This not only wastes the resource of the processor core 2, but also cannot save energy needed by the processor core 2. On the contrary, if the energy efficiency policy A can be adapted to a sharp decrease in the load of the service, the device may be indicated to turn off the processor core 2 in advance before the load of the service is about to decrease sharply. This may reduce the power consumption of the device more significantly.

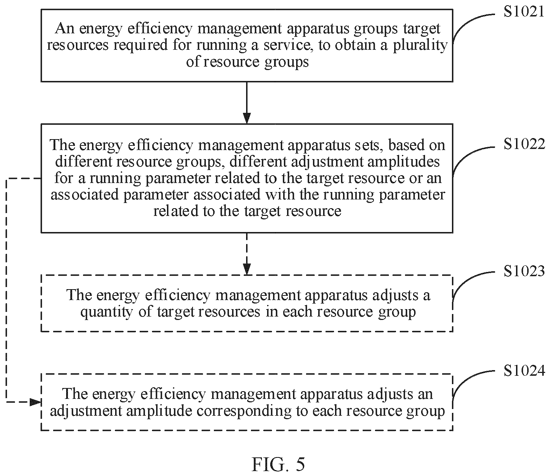

To enable the energy efficiency policy A to adapt to the load change of the service running in the device, as shown in FIG. 5, the energy efficiency management apparatus may determine the energy efficiency policy A through the following steps, in other words, the S102 further includes the following steps:

S1021: The energy efficiency management apparatus groups target resources required for running the service, to obtain a plurality of resource groups.

Specifically, the energy efficiency management apparatus obtains a plurality of running parameters required for running the service, predicts load of the service in a future time period (referred to as future load of the service below) based on the plurality of running parameters required for running the service, and groups the target resources based on the future load of the service, to obtain the plurality of resource groups. In this step, the plurality of running parameters required for running the service include running parameters of the service in a current time period and a historical time period. The future load of the service may be represented in one or more of the following manners: a quantity of to-be-occupied target resources of the service or a quantity of to-be-remained target resources in the device when the service runs in the future time period, or information that can represent a service volume of the service in the future time period, such as usage of the target resource required for running the service in the future time period. The target resources are distributed in the plurality of resource groups, and different resource groups include a same resource, that is, the target resources.

In some embodiments, that the energy efficiency management apparatus predicts future load of the service based on the plurality of running parameters required for running the service includes: The energy efficiency management apparatus inputs the plurality of running parameters required for running the service into a load prediction model, and obtains the future load of the service by learning based on the load prediction model. The load prediction model may be obtained by training a second training set by using a clustering algorithm (for example, a k-means algorithm), a time series prediction algorithm (for example, a moving average or exponential smoothing), a machine learning algorithm (for example, a support vector regression (support vector regression, SVR) algorithm, a unary linear regression (ULR) algorithm, a logistic regression algorithm, or a deep learning algorithm), or the like. The second training set may include a running parameter and load of the service in the historical time period, or a running parameter and load of another service in the historical time period.

In some embodiments, that the energy efficiency management apparatus groups the target resources based on the future load of the service, to obtain the plurality of resource groups includes: The energy efficiency management apparatus determines a quantity of target resources in each resource group and an initial configuration of the target resource based on the future load of the service, to ensure that in this grouping manner, the performance of the service can meet a performance requirement expected by a user. If the target resource is a processor core, the initial configuration of the resource includes a frequency of the processor core, a voltage of the processor core, whether the processor core performs a cache prefetching operation, and the like. If the target resource is a cache, the initial configuration of the resource includes a frequency of the cache, whether cache prefetching is supported, and the like. If the target resource is a memory, the initial configuration of the resource includes a frequency of the memory, a duty cycle of the memory, a refresh frequency of the memory, a state of a memory module in the memory, and the like. If the target resource is a storage medium, the initial configuration of the resource includes a state of the storage medium, a motor rotational speed of the storage medium, a refresh frequency of the storage medium, and the like.

Optionally, the target resource may be a resource with high relevance to the type of sensitivity of the service, in other words, a resource that has great impact on the performance of the service. For example, a resource with high relevance to the instruction delay-sensitive service is the processor core in the device; a resource with high relevance to the cache bandwidth-sensitive service is the cache in the device; a resource with high relevance to the memory bandwidth-sensitive service is the memory in the device; and a resource with high relevance to the storage medium response delay-sensitive service is the storage medium in the device.

Optionally, the target resource may alternatively be a resource with low relevance to the type of sensitivity of the service, in other words, a resource that has little impact on the performance of the service. For example, a resource with low relevance to the instruction delay-sensitive service includes the cache, the memory, or the storage medium in the device; a resource with low relevance to the cache bandwidth-sensitive service includes the processor core, the memory, or the storage medium in the device; a resource with low relevance to the memory bandwidth-sensitive service includes the processor core, the cache, or the storage medium in the device; and a resource with low relevance to the storage medium response delay-sensitive service includes the processor core, the cache, or the memory in the device.

S1022: The energy efficiency management apparatus sets, based on the different resource groups, different adjustment amplitudes for a running parameter related to the target resource or an associated parameter associated with the running parameter related to the target resource.

The selected running parameters include the running parameter related to the target resource, and the associated parameters include the associated parameter associated with the running parameter related to the target resource.

In some embodiments, the plurality of resource groups include a hot resource group and a warm resource group. A principle for setting different adjustment amplitudes is as follows: improving resource usage of the hot resource group or maintaining the original resource usage, and reducing resource usage of the warm resource group, so that the resource usage of the hot resource group is higher than resource usage of the warm resource group. The types of sensitivity of the four services in S101 are used as an example to describe the different adjustment amplitudes.

For the instruction delay-sensitive service, an example in which the target resource is a processor core in the device is used. The energy efficiency management apparatus may set one or more of the following: an increase amplitude of a frequency of a processor core in the hot resource group, a decrease amplitude of a frequency of a processor core in the warm resource group, a decrease amplitude of a voltage of the processor core in the hot resource group or the warm resource group, and setting the processor core in the hot resource group or the warm resource group to not performing a cache prefetching operation.

Optionally, the energy efficiency management apparatus may set the increase amplitude of the frequency of the processor core in the hot resource group to a corresponding maximum increase amplitude, to increase the frequency of the processor core in the hot resource group to an allowable maximum frequency of the processor core.

Optionally, the energy efficiency management apparatus may determine the decrease amplitude of the frequency of the processor core in the warm resource group in the following manner: It is assumed that adjustable values of the frequency of the processor core in the warm resource group are sequentially F₁, F₂, ..., and Fₙ in ascending order, where F₁, F₂, ..., and Fₙ are all positive numbers greater than 0. During specific adjustment, a plurality of running parameters (which may not include the frequency of the processor core) and the maximum frequency Fₙ of the device are first input into the foregoing performance evaluation model, to obtain an adjustment amplitude f₁. Then, the plurality of running parameters and the minimum frequency F₁ are input into the performance evaluation model, to obtain an adjustment amplitude f₂. A performance loss percentage between service performance corresponding to the adjustment amplitude f₂ and service performance corresponding to the adjustment amplitude f₁ is calculated. If the performance loss percentage meets a performance loss requirement, it is determined that an adjustment amplitude of a processor core frequency in the warm resource group may be set to f₂, or if the performance loss percentage does not meet a performance loss requirement, the plurality of running parameters and the frequency F₂ are input into the performance evaluation model, to obtain an adjustment amplitude f₃; and so on, until the performance loss percentage between service performance corresponding to an obtained adjustment amplitude and service performance corresponding to the adjustment amplitude f₁ meets the performance loss requirement. The service performance corresponding to an adjustment amplitude (for example, the adjustment amplitude f₁ and the adjustment amplitude f₂) refers to performance of the service obtained when the energy efficiency management apparatus decreases the frequency of the processor core in the warm resource group based on the adjustment amplitude. Similarly, the decrease amplitude of the voltage of the processor core in the hot resource group or the warm resource group may also be determined in the manner of determining the decrease amplitude of the frequency of the processor core in the warm resource group. Therefore, details are not described herein again.

For the cache bandwidth-sensitive service, an example in which the target resource is a cache in the device is used. The energy efficiency management apparatus may set one or more of the following: an increase amplitude of a frequency of a cache in the hot resource group, setting the cache in the hot resource group to supporting a CPU in performing a cache prefetching operation, a decrease amplitude of a frequency of a cache in the warm resource group, and setting the cache in the warm resource group to not supporting a CPU in performing a cache prefetching operation. The increase amplitude of the frequency of the cache in the hot resource group may be set to a corresponding maximum increase amplitude, to increase the frequency of the cache in the hot resource group to an allowable maximum frequency of the cache. A manner of determining the decrease amplitude of the frequency of the cache in the warm resource group is similar to the manner of determining the decrease amplitude of the frequency of the processor core in the warm resource group. Therefore, details are not described again.

For the memory bandwidth-sensitive service, an example in which the target resource is a memory is used. The energy efficiency management apparatus may set one or more of the following: an increase amplitude of a frequency of a memory in the hot resource group, an increase amplitude of a duty cycle of the memory in the hot resource group, an increase amplitude of a refresh frequency of the memory in the hot resource group, a decrease amplitude of a frequency of a memory in the warm resource group, a decrease amplitude of a duty cycle of the memory in the warm resource group, and a decrease amplitude of a refresh frequency of the memory in the warm resource group. The increase amplitude of the frequency of the memory in the hot resource group, the increase amplitude of the duty cycle of the memory in the hot resource group, and the increase amplitude of the refresh frequency of the memory in the hot resource group each may be set to a corresponding maximum increase amplitude, to increase the frequency, the duty cycle, and the refresh frequency of the memory in the hot resource group to an allowable maximum frequency, an allowable maximum duty cycle, and an allowable maximum refresh frequency of the memory, respectively. A manner of determining the decrease amplitude of the frequency of the memory in the warm resource group, the decrease amplitude of the duty cycle of the memory in the warm resource group, and the decrease amplitude of the refresh frequency of the memory in the warm resource group is similar to the manner of determining the decrease amplitude of the frequency of the processor core in the warm resource group. Therefore, details are not described again.

For the storage medium response delay-sensitive service, an example in which the target resource is a storage medium is used. The energy efficiency management apparatus may set one or more of the following: setting a state of a storage medium in the hot resource group to a working state, a decrease amplitude of a motor rotational speed of a storage medium in the warm resource group, a decrease amplitude of a refresh frequency of the storage medium in the warm resource group, and setting a state of the storage medium in the warm resource group to a standby state. A manner of determining the decrease amplitude of the motor rotational speed of the storage medium in the warm resource group and the decrease amplitude of the refresh frequency of the storage medium in the warm resource group is similar to the manner of determining the decrease amplitude of the frequency of the processor core in the warm resource group. Therefore, details are not described again.

Further, the plurality of resource groups further include a cold resource group, and a principle for setting the different adjustment amplitudes further includes: reducing resource usage of the cold resource group, so that the resource usage of the cold resource group is lower than the resource usage of the warm resource group. The types of sensitivity of the four services in S101 are still used as an example for description of the different adjustment amplitudes.

For the instruction delay-sensitive service, an example in which the target resource is a processor core in the device is used. The energy efficiency management apparatus may set one or more of the following: a decrease amplitude of a frequency of a processor core in the cold resource group, a decrease amplitude of a voltage of the processor core in the cold resource group, setting the processor core in the cold resource group to not performing a cache prefetching operation, and setting a state of a part of or all processor cores in the cold resource group to an off state. The decrease amplitude of the frequency of the processor core in the cold resource group and the decrease amplitude of the voltage of the processor core in the cold resource group each may be set to a corresponding maximum decrease amplitude, to decrease the frequency and the voltage of the processor core in the cold resource group to an allowable minimum frequency and an allowable minimum voltage of the processor core, respectively.

For the cache bandwidth-sensitive service, an example in which the target resource is a cache in the device is used. The energy efficiency management apparatus may set one or more of the following: a decrease amplitude of a frequency of a cache in the cold resource group, setting the cache in the cold resource group to not supporting a CPU in performing a cache prefetching operation, and releasing a part of or all caches in the cold resource group. The decrease amplitude of the frequency of the cache in the cold resource group may be set to a corresponding maximum decrease amplitude, to decrease the frequency of the cache in the cold resource group to an allowable minimum frequency of the cache.

For the memory bandwidth-sensitive service, an example in which the target resource is a memory in the device is used. The energy efficiency management apparatus may set one or more of the following: a decrease amplitude of a frequency of a memory in the cold resource group, a decrease amplitude of a duty cycle of the memory in the cold resource group, a decrease amplitude of a refresh frequency of the memory in the cold resource group, and setting a part of or all memory modules included in the memory in the cold resource group to an off state. The decrease amplitude of the frequency of the memory in the cold resource group, the decrease amplitude of the duty cycle of the memory in the cold resource group, and the decrease amplitude of the refresh frequency of the memory in the cold resource group each may be set to a corresponding maximum decrease amplitude, to decrease the frequency, the duty cycle, and the refresh frequency of the memory in the cold resource group to an allowable minimum frequency, an allowable minimum duty cycle, and an allowable minimum refresh frequency of the memory.

For the storage medium response delay-sensitive service, an example in which the target resource is a storage medium in the device is used. The energy efficiency management apparatus may set one or more of the following: a decrease amplitude of a motor rotational speed of a storage medium in the cold resource group, a decrease amplitude of a refresh frequency of the storage medium in the cold resource group, and setting a state of the storage medium in the cold resource group to an idle state or an off state. The decrease amplitude of the motor rotational speed of the storage medium in the cold resource group and the decrease amplitude of the refresh frequency of the storage medium in the cold resource group each may be set to a corresponding maximum decrease amplitude, to decrease the frequency and the refresh frequency of the storage medium in the cold resource group to an allowable minimum rotational speed and an allowable minimum refresh frequency of the storage medium.

Correspondingly, S 103 includes: The energy efficiency management apparatus adjusts, at different amplitudes based on the different resource groups and based on the different adjustment amplitudes determined in S1022, the running parameter related to the target resource or the associated parameter associated with the running parameter related to the target resource.

In some embodiments, the plurality of resource groups include a hot resource group and a warm resource group. The adjustment at different amplitudes includes: adjusting the running parameter related to the target resource or the running parameter related to the target resource, to adjust the hot resource group to improving the resource usage or maintaining the original resource usage, and adjust the warm resource group to reducing the resource usage. The different adjustment amplitudes described in S1022 are used as an example.

For the instruction delay-sensitive service, the energy efficiency management apparatus may perform one or more of the following operations: increasing or skipping adjusting a frequency of a processor core in the hot resource group, decreasing a frequency of a processor core in the warm resource group, decreasing a voltage of the processor core in the hot resource group or the warm resource group, and setting the processor core in the hot resource group or the warm resource group to not performing a cache prefetching operation.

For the cache bandwidth-sensitive service, the energy efficiency management apparatus may perform one or more of the following operations: increasing or skipping adjusting a frequency of a cache in the hot resource group, setting the cache in the hot resource group to supporting a CPU in performing a cache prefetching operation, decreasing a frequency of a cache in the warm resource group, and setting the cache in the warm resource group to not supporting a CPU in performing a cache prefetching operation.

For the memory bandwidth-sensitive service, the energy efficiency management apparatus may perform one or more of the following operations: increasing or skipping adjusting a frequency of a memory in the hot resource group, increasing or skipping adjusting a duty cycle of the memory in the hot resource group, increasing or skipping adjusting a refresh frequency of the memory in the hot resource group, decreasing a frequency of a memory in the warm resource group or a cold resource group, decreasing a duty cycle of the memory in the warm resource group or the cold resource group, and decreasing a refresh frequency of the memory in the warm resource group or the cold resource group.

For the storage medium response delay-sensitive service, the energy efficiency management apparatus may perform one or more of the following operations: maintaining a storage medium in the hot resource group in a working state, decreasing a motor rotational speed of the storage medium in the warm resource group, decreasing a refresh frequency of the storage medium in the warm resource group, and setting a state of the storage medium in the warm resource group to a standby state.

Further, the plurality of resource groups further include a cold resource group. The adjustment at different amplitudes includes: adjusting the running parameter related to the target resource or the running parameter related to the target resource, to adjust the cold resource group to reducing the resource usage more significantly than reducing that of the warm resource group. The different adjustment amplitudes described in S 1022 are still used as an example.

For the instruction delay-sensitive service, the energy efficiency management apparatus may further perform one or more of the following operations: decreasing the frequency of the processor core in the cold resource group, decreasing the voltage of the processor core in the cold resource group, setting the processor core in the cold resource group to not performing the cache prefetching operation, and turning off a part of or all processor cores in the cold resource group.

For the cache bandwidth-sensitive service, the energy efficiency management apparatus may further perform one or more of the following: decreasing the frequency of the cache in the cold resource group, setting the cache in the cold resource group to not supporting the CPU in performing the cache prefetching operation, and releasing a part of or all caches in the cold resource.

For the memory bandwidth-sensitive service, the energy efficiency management apparatus may further perform one or more of the following operations: decreasing the frequency of the memory in the cold resource group, decreasing the duty cycle of the memory in the cold resource group, decreasing the refresh frequency of the memory in the cold resource group, and releasing a part of or all memories in the cold resource group.

For the storage medium response delay-sensitive service, the energy efficiency management apparatus may further perform one or more of the following operations: decreasing the motor rotational speed of the storage medium in the cold resource group, decreasing the refresh frequency of the storage medium in the cold resource group, and setting the state of the storage medium in the cold resource group to the idle state or the off state.

In the foregoing manner of improving the resource usage of the hot resource group and reducing the resource usage of the warm resource group and the cold resource group, resource usage of the target resource occupied by the service can be reduced as a whole, thereby reducing the power consumption of the device. In addition, in the foregoing manner, when predicting that the future load of the service is to increase, the energy efficiency management apparatus may group more target resources into the hot resource group in advance, so that in case of more load, more target resources can be used for timely processing. When predicting that future load of the service is to decrease, the energy efficiency management apparatus may group more target resources into the warm resource group or the cold resource group in advance, to reduce the power consumption of the device more significantly. In other words, in the foregoing manner, a quantity of target resources in the plurality of resource groups can adapt to the load change of the service.

It should be understood that in actual application, the following case may occur: The future load of the service predicted by the energy efficiency management apparatus may be different from actual load of the service in a future time period, or a performance requirement expected by a user in a future time period changes. Therefore, to meet the performance requirement expected by the user and reduce as much power consumption of the device as possible, optionally, the energy efficiency management apparatus may further perform one or more of the following steps.

S1023: The energy efficiency management apparatus adjusts a quantity of target resources in each resource group.

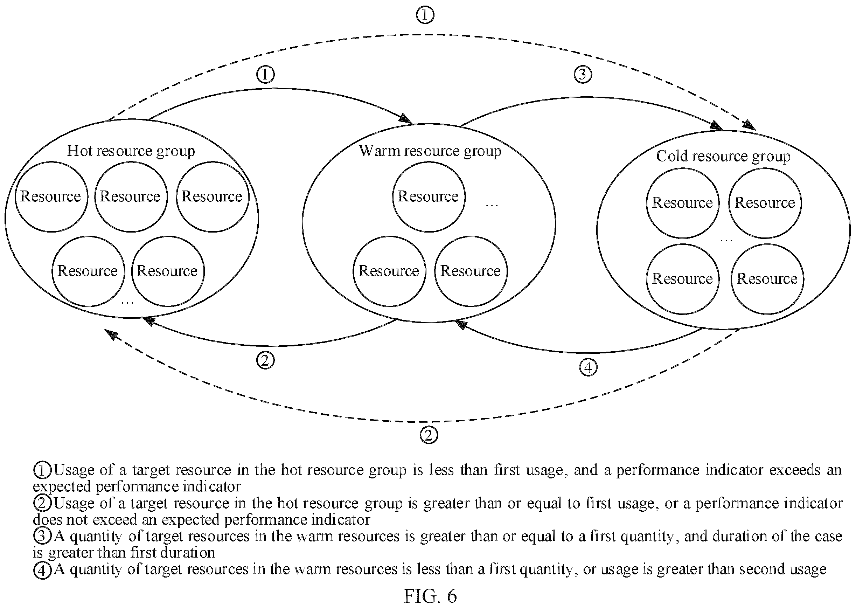

Specifically, as shown in FIG. 6, ① when usage of a target resource in the hot resource group is less than first usage, and a performance indicator of the target resource in the hot resource group exceeds an expected performance indicator, it indicates that a quantity of target resources in the current hot resource group is greater than a quantity required for running the service. In this case, to reduce the power consumption of the device, the energy efficiency management apparatus may switch a part of or all target resources in the hot resource group to the warm resource group, or switch a part of or all target resources in the hot resource group to the cold resource group. The performance indicator indicates the performance of the service, and may be specifically represented by a parameter with high relevance to the performance of the service. For example, for the instruction delay-sensitive service, the performance indicator may include a response delay of instruction processing, a cache hit rate, an IPC, and the like; for the cache bandwidth-sensitive service, the performance indicator may include a cache bandwidth; for the memory bandwidth-sensitive service, the performance indicator may include a memory bandwidth; and for the storage medium response delay-sensitive service, the performance indicator may include an IOPS and the like. The expected performance indicator indicates the performance requirement expected by the user. (2) When usage of a target resource in the hot resource group is greater than or equal to first usage, or a performance indicator of the target resource in the hot resource group does not exceed an expected performance indicator, it indicates that a quantity of target resources in the current hot resource group is less than a quantity required for running the service. In this case, to avoid affecting the performance of the service, the energy efficiency management apparatus may switch a part of or all target resources in the warm resource group to the hot resource group, or switch a part of or all target resources in the cold resource group to the hot resource group. In this way, the quantity of target resources in the hot resource group can meet the actual load of the service and the performance requirement of the service, and the power consumption of the device can be reduced as much as possible. ③ When a quantity of target resources in the warm resource group is greater than or equal to a first quantity, and duration of the case is greater than first duration, it indicates that the quantity of target resources in the current warm resource group is large. In this case, to reduce the power consumption of the device, the energy efficiency management apparatus may switch a part of or all target resources in the warm resource group to the cold resource group. ④ When a quantity of target resources in the warm resource group is less than a first quantity, or usage of a target resource in the warm resource group is greater than second usage, it indicates that the quantity of target resources in the current warm resource group is small. In this case, to ensure that there are sufficient target resources that are in the warm resource group and that can be switched to the hot resource group, the energy efficiency management apparatus may switch a part of or all target resources in the cold resource group to the warm resource group. The first usage, the first quantity, the first duration, and the second usage may be preset by the user, or may be dynamically adjusted by the energy efficiency management apparatus based on an actual situation. In this way, the quantity of target resources in the hot resource group can be maintained within a specific range. When the quantity of target resources in the hot resource group is insufficient, the hot resource group may be supplemented with target resources in a timely and sufficient manner, or when load of the service is light, a quantity of target resources in the cold resource group may be larger, thereby reducing the power consumption of the device.

S1024: The energy efficiency management apparatus adjusts an adjustment amplitude corresponding to each resource group.

Specifically, ① when the usage of the target resource in the hot resource group is less than the first usage, and the performance indicator of the target resource in the hot resource group exceeds the expected performance indicator, the energy efficiency management apparatus may perform the following steps: for the running parameter related to the target resource in the hot resource group or the associated parameter associated with the running parameter related to the target resource, reducing an adjustment amplitude of the running parameter or the associated parameter that affects the performance of the service, for example, for the instruction delay-sensitive service, reducing the increase amplitude of the frequency of the processor core in the hot resource group, to reduce a hot resource occupied by the service and reduce the power consumption of the device. ② When the usage of the target resource in the hot resource group is greater than or equal to the first usage, or the performance indicator of the target resource in the hot resource group does not exceed the expected performance indicator, the energy efficiency management apparatus may perform the following steps: for the running parameter related to the target resource in the hot resource group or the associated parameter associated with the running parameter related to the target resource, increasing an adjustment amplitude of the running parameter or the associated parameter that affects the performance of the service, for example, for the instruction delay-sensitive service, increasing the increase amplitude of the frequency of the processor core in the hot resource group, to ensure that configuration of the target resource in the hot resource group meets the actual load of the service and the performance requirement expected by the user. ③ When the quantity of target resources in the warm resource group is greater than or equal to the first quantity, and duration of the case is greater than the first duration, it indicates that the quantity of target resources in the current warm resource group is large. To reduce the power consumption of the device, the energy efficiency management apparatus may perform the following step: for the warm resource group, increasing an adjustment amplitude of the running parameter related to the target resource or the associated parameter associated with the running parameter related to the target resource.

Further, in actual application, an adjustment amplitude of the selected running parameters and the at least one of associated parameters that are indicated by the energy efficiency policy A may not be a maximum adjustment amplitude. In other words, the at least one parameter can be further adjusted, based on the adjustment amplitude indicated by the energy efficiency policy A, without affecting the performance of the service, so that the power consumption of the device is reduced. Therefore, as shown in FIG. 4, after performing S103, the energy efficiency management apparatus may further perform any one or more of the following steps:

S104: The energy efficiency management apparatus obtains a benefit parameter corresponding to the energy efficiency policy A.

The benefit parameter corresponding to energy efficiency policy A (referred to as a benefit parameter A below) indicates an energy efficiency effect obtained by performing energy efficiency management on the device by using the energy efficiency policy A. Specifically, the benefit parameter A may include the power consumption of the device obtained by performing the energy efficiency management on the device by using the energy efficiency policy A (referred to as power consumption A below), and the performance of the service running in the device under the power consumption (referred to as performance A below).

Specifically, the energy efficiency management apparatus may obtain the benefit parameter A in the following manner: After performing the energy efficiency management on the device by using the energy efficiency policy A, the energy efficiency management apparatus obtains, at preset time, power consumption of the device and a performance indicator that may indicate the service running in the device, determines the power consumption A based on the power consumption, and determines the performance A based on the performance indicator. The preset time may be preset by the user or the energy efficiency management apparatus, or may be dynamically adjusted by the energy efficiency management apparatus based on an actual situation. For the descriptions of the performance indicator, refer to S1023.

S105: The energy efficiency management apparatus adjusts the energy efficiency policy A based on the benefit parameter A.

Specifically, the energy efficiency management apparatus determines a difference between the performance A and performance B, and a difference between the power consumption A and power consumption B, and then adjusts the energy efficiency policy A based on the differences. The performance B may meet the performance requirement expected by the user, and the power consumption B is power consumption of the device before the energy efficiency management apparatus performs the energy efficiency management on the device by using the energy efficiency policy A.

In some embodiments, that the energy efficiency management apparatus adjusts the energy efficiency policy A based on the differences includes: The energy efficiency management apparatus adjusts the adjustment amplitude of the selected running parameters and the at least one of associated parameters based on the differences.

Further, if the energy efficiency management apparatus further performs S1021 to S1024, that the energy efficiency management apparatus adjusts the adjustment amplitude of the selected running parameters and the at least one of associated parameters based on the differences includes: The energy efficiency management apparatus adjusts, at different amplitudes based on the differences and based on the different resource groups, the adjustment amplitude of the running parameter related to the target resource or the associated parameter associated with the running parameter related to the target resource.

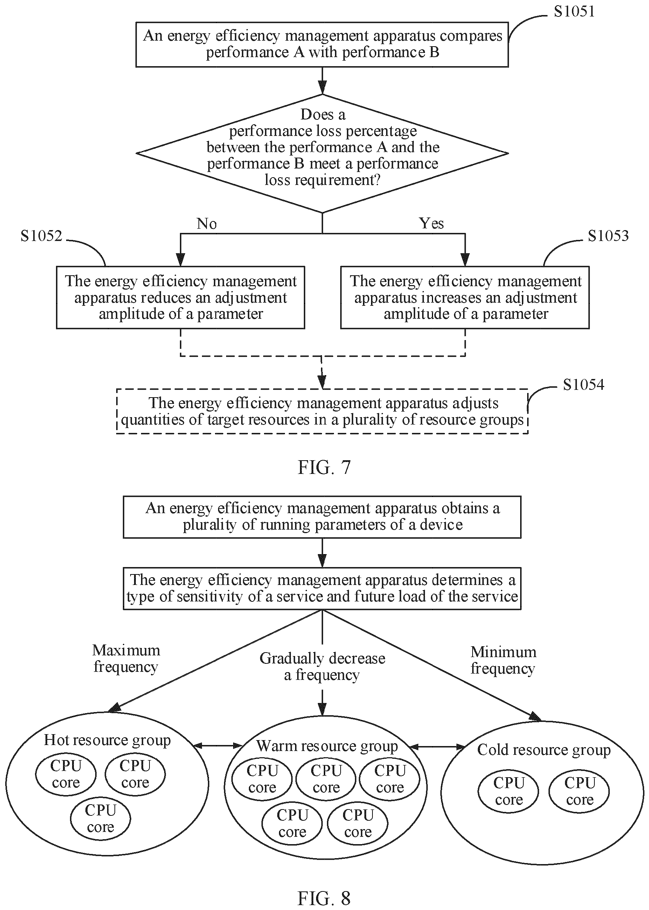

As shown in FIG. 7, for a specific implementation process in which the energy efficiency management apparatus adjusts the energy efficiency policy A based on the benefit parameter A in this step, refer to the following S1051 to S1054.

S1051: The energy efficiency management apparatus compares the performance A with the performance B. If a performance loss percentage between the performance A and the performance B does not meet the performance loss requirement, it indicates that the performance A does not meet the performance requirement expected by the user, in other words, performing the energy efficiency management on the device according to the energy efficiency policy A affects the performance of the service running in the device. Then, one or more of S1052 and S1054 may be performed. If a loss percentage between the performance A and the performance B meets the performance loss requirement, it indicates that the performance A meets the performance requirement expected by the user, in other words, performing the energy efficiency management on the device by using the energy efficiency policy A does not affect the performance of the service running in the device. Then, one or more of S1053 and S1054 may be performed.

S1052: The energy efficiency management apparatus reduces the adjustment amplitude of the selected running parameters and the at least one of associated parameters that are indicated by the energy efficiency policy A.

It should be understood that, if the loss percentage between the performance A and the performance B does not meet the performance loss requirement, it indicates that the adjustment amplitude of the at least one parameter is large. As a result, after a corresponding parameter is adjusted based on the adjustment amplitude, the performance of the service does not meet the performance requirement expected by the user. Therefore, the energy efficiency management apparatus may resolve the foregoing problem by reducing the adjustment amplitude of the at least one parameter.

Optionally, the energy efficiency management apparatus further restores an adjusted parameter to a state before the adjustment in time, to reduce impact of the energy efficiency policy A on the performance of the service running in the device.

S1053: The energy efficiency management apparatus increases the adjustment amplitude of the selected running parameters and the at least one of associated parameters that are indicated by the energy efficiency policy A.

Specifically, the energy efficiency management apparatus compares the power consumption A with the power consumption B. If the power consumption A is less than the power consumption B, it indicates that performing the energy efficiency management on the device according to the energy efficiency policy A can reduce the power consumption of the device more significantly. Then, an adjustment amplitude used for each adjustment may be increased to a first adjustment amplitude. If the power consumption A is greater than or equal to the power consumption B, an adjustment amplitude used for a next adjustment is increased to a second adjustment amplitude. The first adjustment amplitude may be used for a plurality of subsequent adjustments, and the second adjustment amplitude is used only in the next adjustment. The first adjustment amplitude and the second adjustment amplitude may be the same or may be different.

Optionally, if the energy efficiency management apparatus performs S1021 to S1024, the energy efficiency management apparatus may further perform the following steps to adjust the energy efficiency policy A.

S1054: The energy efficiency management apparatus adjusts a quantity of target resources in each resource group in the energy efficiency policy A based on the differences.

Specifically, if the loss percentage between the performance A and the performance B does not meet the performance loss requirement, the energy efficiency management apparatus increases a quantity of resources in the hot resource group, for example, switches a part of or all resources in the warm resource group to the hot resource group. If the loss percentage between the performance A and the performance B meets the performance loss requirement, the energy efficiency management apparatus may increase a quantity of resources in the warm resource group or the cold resource group.

Further, when the loss percentage between the performance A and the performance B meets the performance loss requirement, if the power consumption A is less than the power consumption B, the energy efficiency management apparatus increases a quantity of target resources added to the hot resource group each time to a first quantity; or if the power consumption A is greater than or equal to the power consumption B, the energy efficiency management apparatus increases a quantity of target resources added to the hot resource group next time to a second quantity. The first quantity may be used for a subsequent adjustment, and the second quantity is used only in a next adjustment. The first quantity and the second quantity may be the same or may be different.

Correspondingly, if the energy efficiency management apparatus further performs S1021 to S1024, S1052 further includes: for the running parameter related to the target resource in the hot resource group or the associated parameter associated with the running parameter related to the target resource, increasing the adjustment amplitude of the running parameter or the associated parameter that affects the performance of the service, for example, for the instruction delay-sensitive service, increasing the increase amplitude of the frequency of the processor core in the hot resource group. S1053 further includes: for the warm resource group and the cold resource group, increasing the adjustment amplitude of the running parameter related to the target resource or the associated parameter associated with the running parameter related to the target resource without affecting the performance of the service.

Further, S1053 further includes: adjusting, based on a difference between the power consumption A and the power consumption B, an adjustment amplitude of a running parameter related to a target resource in the warm resource group or the cold resource group or an associated parameter associated with the running parameter related to the target resource. A specific implementation principle is similar to that of S 1054. Therefore, details are not described again.

S106: The energy efficiency management apparatus performs the energy efficiency management on the device again according to an adjusted energy efficiency policy A.

An implementation process of this step is similar to the process of S103. Therefore, details are not described again.

Optionally, the energy efficiency management apparatus may further continue to repeat S104 to S106, to continuously adjust the energy efficiency policy A, so that the device reduces as much power consumption as possible under management of the adjusted energy efficiency policy A.

It can be learned from the foregoing energy efficiency management method that the energy efficiency management apparatus reduces, by adjusting the running parameter or the associated parameter associated with the running parameter in the device, a corresponding resource occupied by the service running in the device, thereby reducing the power consumption of the device. Therefore, the following further describes functions of the foregoing energy efficiency management apparatus by using Example 1 to Example 3.

Example 1: An energy efficiency management apparatus reduces power consumption of a device by adjusting a frequency of a CPU in the device.

As shown in FIG. 8, in a process in which the device runs a service, the energy efficiency management apparatus obtains a plurality of running parameters of the device in real time, determines a type of sensitivity of the service running in the device and future load of the service based on the plurality of running parameters, and divides a plurality of CPU cores in the CPU in the device into a hot resource group, a warm resource group, and a cold resource group based on the type of sensitivity of the service running in the device and the future load of the service, where a frequency of a CPU core in the hot resource group is set to an allowable maximum frequency of the CPU core, a frequency of a CPU in the warm resource group is set to any frequency that is lower than the frequency of the CPU core in the hot resource group and higher than a frequency of a CPU core in the cold resource group, and the frequency of the CPU core in the cold resource group is set to an allowable minimum frequency of the CPU core. Next, the energy efficiency management apparatus may further gradually adjust a quantity of CPU cores in each resource group based on actual load of the service, and gradually decrease the frequency of the CPU core in the warm resource group, to reduce as much power consumption of the CPU in the device as possible, thereby reducing power consumption of the device.

Example 2: An energy efficiency management apparatus reduces power consumption of a device by adjusting a state of an SSD.

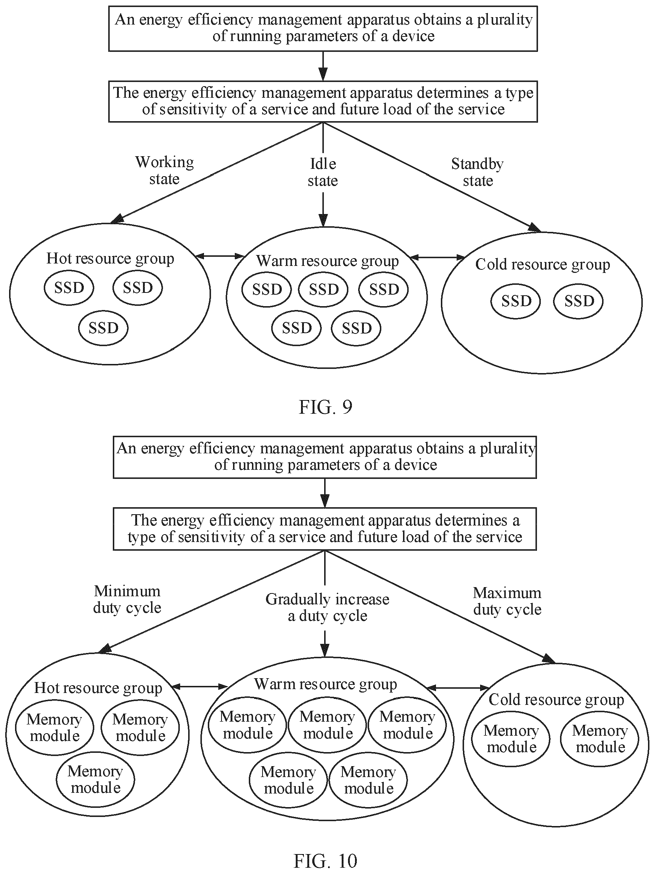

As shown in FIG. 9, in a process in which the device runs a service, the energy efficiency management apparatus obtains a plurality of running parameters of the device in real time, and determines, based on the plurality of running parameters, a type of sensitivity of the service running in the device and future load of the service. If the energy efficiency management apparatus pre-determines to divide SSDs in the device into a hot resource group, a warm resource group, and a cold resource group, where a state of an SSD in the hot resource group is set to a working state, a state of an SSD in the warm resource group is set to an idle state, and a state of an SSD in the cold resource group is set to a standby state, then the energy efficiency management apparatus continuously adjusts a quantity of SSDs in each resource group based on the foregoing configuration, the type of sensitivity of the service running in the device, and the future load of the service, to reduce as much power consumption of the SSD in the device as possible while ensuring that the SSD in the hot resource group can meet a requirement that is of the service running in the device and that is on the SSD and a requirement on the future load of the service, thereby reducing power consumption of the device.

Example 3: An energy efficiency management apparatus reduces power consumption of a device by adjusting a duty cycle of a memory.

As shown in FIG. 10, in a process in which the device runs a service, the energy efficiency management apparatus obtains a plurality of running parameters of the device in real time, determines a type of sensitivity of the service running in the device and future load of the service based on the plurality of running parameters, and divides a plurality of memory modules in the memory of the device into a hot resource group, a warm resource group, and a cold resource group based on the type of sensitivity of the service running in the device and the future load of the service, where a duty cycle of a memory module in the hot resource group is set to an allowable minimum duty cycle of the memory module, a duty cycle of a memory module in the warm resource group is set to any duty cycle that is greater than the duty cycle of the memory module in the hot resource group and less than a duty cycle of a memory module in the cold resource group, and the duty cycle of the memory module in the cold resource group is set to an allowable maximum duty cycle of the memory module. Next, the energy efficiency management apparatus may further gradually adjust a quantity of memory modules in each resource group and the duty cycle of the memory module in the warm resource group based on actual load of the service, to reduce as much power consumption of the memory in the device as possible, thereby reducing power consumption of the device.

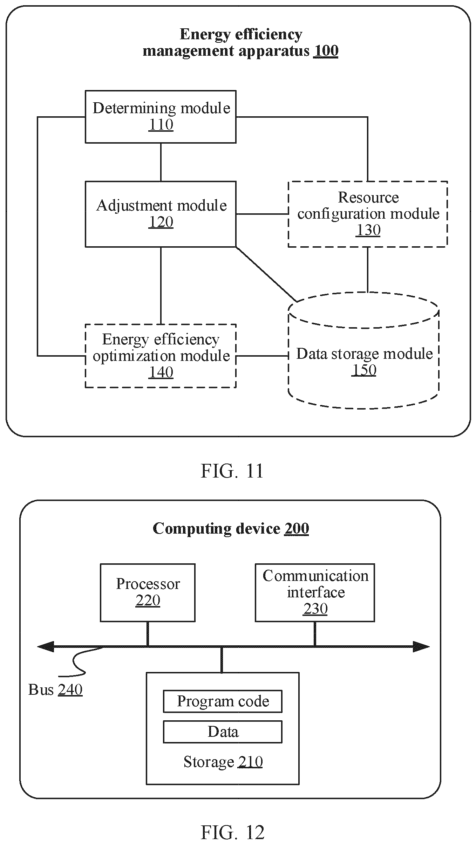

The foregoing describes in detail functions of the energy efficiency management apparatus provided in embodiments of this application with reference to the energy efficiency management methods shown in FIG. 4 to FIG. 10. The following describes in detail the energy efficiency management apparatus from a perspective of a structure with reference to FIG. 11.

For example, FIG. 11 is a diagram of a structure of the foregoing energy efficiency management apparatus. An energy efficiency management apparatus 100 in the figure may be the energy efficiency management apparatus in the foregoing method embodiments. As shown in FIG. 11, the energy efficiency management apparatus 100 includes a determining module 110 and an adjustment module 120. Optionally, the energy efficiency management apparatus 100 further includes a resource configuration module 130, an energy efficiency optimization module 140, and a data storage module 150. The determining module 110, the adjustment module 120, the resource configuration module 130, the energy efficiency optimization module 140, and the data storage module 150 work together to implement the steps performed by the energy efficiency management apparatus in the foregoing method embodiments. Specifically, the determining module 110 is configured to perform S101; the adjustment module 120 is configured to perform other steps (that is, S1022 to S1024) in S102 other than S1021, S103, and S106; the resource configuration module 130 is configured to perform S1021; the energy efficiency optimization module 140 is configured to perform S104 and S105 (including S1051 to S1054); and the data storage module 150 is configured to store various data generated during running of the energy efficiency management apparatus 100, for example, a type of sensitivity of a service running in a device, an energy efficiency policy A, and an adjusted energy efficiency policy A.

It should be understood that the diagram of the structure shown in FIG. 11 is merely an example structure division manner of the foregoing energy efficiency management apparatus based on functions. A specific structure division manner of the foregoing energy efficiency management apparatus is not limited in embodiments of this application. It should be further understood that, each module in the foregoing energy efficiency management apparatus may be a software module, or may be a hardware module, or may be partially a software module and partially a hardware module.

An embodiment of this application further provides a computing device. For example, FIG. 12 is a diagram of a structure of the computing device. As shown in FIG. 12, a computing device 200 includes a storage 210, a processor 220, a communication interface 230, and a bus 240. The storage 210, the processor 220, and the communication interface 230 communicate with each other through the bus 240.

The storage 210 may include a read-only memory (read only memory, ROM), a static storage device, a dynamic storage device, a random access memory (random access memory, RAM), a hard disk, or the like. The storage 210 may store program code, for example, program code in the determining module 110, program code in the adjustment module 120, program code in the resource configuration module 130, program code in the energy efficiency optimization module 140, and program code in the data storage module 150. When the program code stored in the storage 210 is executed by the processor 220, the processor 220 and the communication interface 230 are configured to perform a part or all of the method (including one or more steps in S101 to S106, S1021 to S1024, and S1051 to S1054) performed by the energy efficiency management apparatus in the foregoing method embodiments. The storage 210 may further store data, for example, intermediate data or result data generated in an execution process of the processor 220, for example, a plurality of running parameters of the device and an energy efficiency policy A.

The processor 220 may be a CPU, a GPU, an application-specific integrated circuit (application-specific integrated circuit, ASIC), a graphics processing unit (graphics processing unit, GPU), or one or more integrated circuits. Alternatively, the processor 220 may be an integrated circuit chip with a signal processing capability. In an implementation process, a function of the energy efficiency management apparatus 100 may be completed by using a hardware integrated logic circuit in the processor 220 or instructions in a form of software. Alternatively, the processor 220 may be a general-purpose processor, a data signal processor (DSP), a field programmable gate array (FPGA) or another programmable logic device, a discrete gate or a transistor logic device, or a discrete hardware component, and may implement or perform the methods, steps, and logical block diagrams disclosed in embodiments of this application. The general-purpose processor may be a microprocessor, or may be any conventional processor, or the like. The methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory or an electrically erasable programmable memory, or a register. The storage medium is located in the storage 210. The processor 220 reads information in the storage 210, and completes a part of or all functions of the energy efficiency management apparatus 100 in combination with hardware of the processor 220.

The communication interface 230 uses a transceiver module, for example, but not limited to, a network interface card or a transceiver, to implement communication between the computing device 200 and another device or a communication network.

The bus 240 may include a peripheral component interconnect (peripheral component interconnect, PCI) bus, an extended industry standard architecture (extended industry standard architecture, EISA) bus, and the like. Buses may be classified into an address bus, a data bus, a control bus, and the like. For ease of representation, the bus is represented by only one line in FIG. 12, but this does not indicate that there is only one bus or only one type of bus. The bus 240 may be included in a path for information transmission among various components in the computing device 200 (for example, the storage 210, the processor 220, and the communication interface 230).

An embodiment of this application further provides a computing device system. The computing device system includes a plurality of computing devices. The energy efficiency management apparatus 100 may be deployed in the plurality of computing devices in the computing device system in a distributed manner. For example, the determining module 110 and the resource configuration module 130 in the energy efficiency management apparatus 100 are deployed in one computing device, and the adjustment module 120, the energy efficiency optimization module 140, and the data storage module 150 are deployed in another computing device.

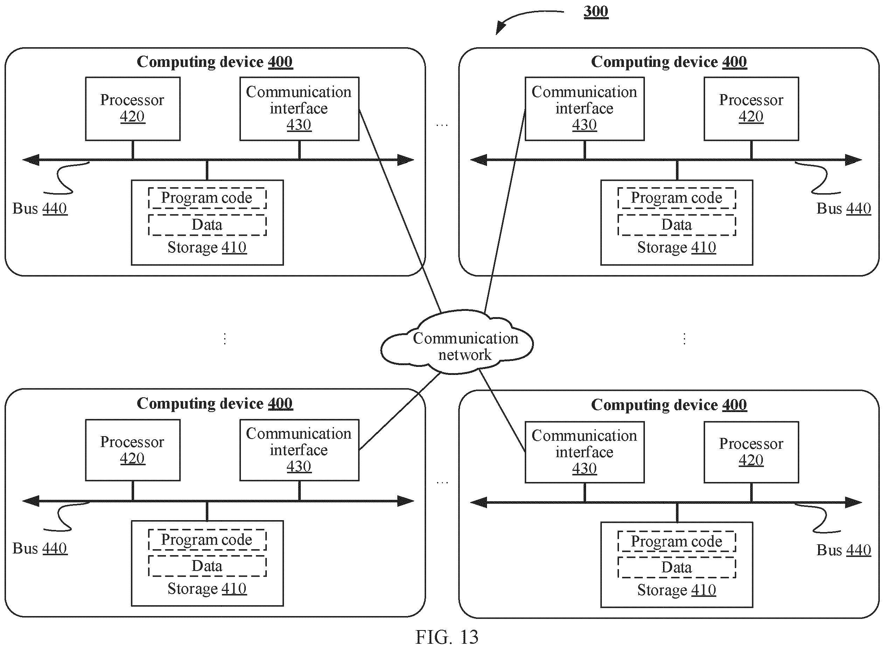

For example, FIG. 13 is a diagram of a structure of the computing device system. As shown in FIG. 13, a computing device system 300 includes a plurality of computing devices 400, and each computing device 400 includes a storage 410, a processor 420, a communication interface 430, and a bus 440. The storage 410, the processor 420, and the communication interface 430 communicate with each other through the bus 440.

The storage 410 may include a ROM, a RAM, a static storage device, a dynamic storage device, a hard disk (for example, an SSD or an HDD), and the like. The storage 410 may store program code, for example, a part of program code in the determining module 110, a part of program code in the adjustment module 120, a part of program code in the resource configuration module 130, a part of program code in the energy efficiency optimization module 140, or a part of program code in the data storage module 150. When the program code stored in the storage 410 is executed by the processor 420, the processor 420 and the communication interface 430 are configured to perform some methods (including some steps in S101 to S106, S1021 to S1024, and S1051 to S1054) performed by the energy efficiency management apparatus in the foregoing method embodiments. The storage 410 may further store data, for example, intermediate data or result data generated in an execution process of the processor 420, for example, a plurality of running parameters of the device and an energy efficiency policy A.

The processor 420 may be a CPU, a GPU, an ASIC, or one or more integrated circuits. Alternatively, the processor 420 may be an integrated circuit chip with a signal processing capability. In an implementation process, a part of functions of the energy efficiency management apparatus 100 may be completed by using a hardware integrated logic circuit in the processor 420 or instructions in a form of software. Alternatively, the processor 420 may be a DSP, an FPGA, a general-purpose processor, another programmable logic device, a discrete gate or a transistor logic device, or a discrete hardware component, and may implement or perform some methods, steps, and logical block diagrams disclosed in embodiments of this application. The general-purpose processor may be a microprocessor, or may be any conventional processor, or the like. The steps of the methods disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory or an electrically erasable programmable memory, or a register. The storage medium is located in the storage 410. The processor 420 reads information in the storage 410, and completes a part of functions of the energy efficiency management apparatus 100 in combination with hardware of the processor 420.

The communication interface 430 uses a transceiver module, for example, but not limited to, a network interface card or a transceiver, to implement communication between the computing device 400 and another computing device or a communication network.

The bus 440 may be a PCI bus, an EISA bus, or the like. Buses may be classified into an address bus, a data bus, a control bus, and the like. For ease of representation, the bus is represented by only one line in FIG. 10, but this does not indicate that there is only one bus or only one type of bus. The bus 440 may be included in a path for information transmission among various components in the computing device 400 (for example, the storage 410, the processor 420, and the communication interface 430).

A communication path is established between the plurality of computing devices 400 by using a communication network, to implement a function of the energy efficiency management apparatus 100. Any computing device may be a computing device (for example, a server) in a cloud environment, a computing device in an edge environment, or a terminal computing device.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform the energy efficiency management method described above, to implement a function of the foregoing energy efficiency management apparatus.

An embodiment of this application further provides a computer-readable storage medium. The computer-readable storage medium may be any usable medium accessible by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the energy efficiency management method described above, or instruct the computing device to perform the energy efficiency management method described above, to implement a function of the foregoing energy efficiency management apparatus.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions in embodiments of this application.

## Claims

1. An energy efficiency management method, comprising:
detecting a type of sensitivity of a service running in a device to a performance requirement; and
selecting a part of a plurality of running parameters of the device based on the type of sensitivity of the service, wherein the selected running parameter is a running parameter with low relevance to the type of sensitivity of the service, and adjusting the selected running parameter or an associated parameter associated with the selected running parameter, to reduce a corresponding resource occupied by the service, wherein power consumption of the device after the adjustment is lower than power consumption of the device before the adjustment.

2. The method according to claim 1, wherein the plurality of running parameters of the device comprise a plurality of running parameters required for running the service.

3. The method according to claim 1 or 2, wherein
the type of sensitivity of the service comprises one or more of the following: an instruction delay-sensitive service that is sensitive to a response delay of instruction processing, a cache bandwidth-sensitive service that is sensitive to a cache bandwidth in the device, a memory bandwidth-sensitive service that is sensitive to a memory bandwidth in the device, or a storage medium response delay-sensitive service that is sensitive to a response delay of a storage medium in the device.

4. The method according to claim 3, wherein
for the instruction delay-sensitive service, the selected running parameter or the associated parameter is a parameter corresponding to a resource that has no impact on the response delay of instruction processing or has little impact on the response delay of instruction processing in a plurality of resources required for running the instruction delay-sensitive service;
for the cache bandwidth-sensitive service, the selected running parameter or the associated parameter is a parameter corresponding to a resource that has no impact on the cache bandwidth in the device or has little impact on the cache bandwidth in the device in a plurality of resources required for running the cache bandwidth-sensitive service;
for the memory bandwidth-sensitive service, the selected running parameter or the associated parameter is a parameter corresponding to a resource that has no impact on the memory bandwidth in the device or has little impact on the memory bandwidth in the device in a plurality of resources required for running the memory bandwidth-sensitive service; and
for the storage medium response delay-sensitive service, the selected running parameter or the associated parameter is a parameter corresponding to a resource that has no impact on the response delay of the storage medium in the device or has little impact on the response delay of the storage medium in the device in a plurality of resources required for running the storage medium response delay-sensitive service.

5. The method according to claim 3 or 4, wherein
the plurality of running parameters of the device comprise one or more of the following: a state of a processor core in the device, a frequency of the processor core, a frequency of a memory, a duty cycle of the memory, a frequency of a cache, and a state of the storage medium;
for the instruction delay-sensitive service, the selected running parameter comprises one or more of the following: the frequency of the memory, the duty cycle of the memory, the frequency of the cache, and the state of the storage medium;
for the cache bandwidth-sensitive service, the selected running parameter comprises one or more of the following: the state of the processor core, the frequency of the processor core, the frequency of the memory, the duty cycle of the memory, and the state of the storage medium;
for the memory bandwidth-sensitive service, the selected running parameter comprises one or more of the following: the state of the processor core, the frequency of the processor core, the frequency of the cache, and the state of the storage medium; and
for the storage medium response delay-sensitive service, the selected running parameter comprises one or more of the following: the state of the processor core, the frequency of the processor core, the frequency of the memory, the duty cycle of the memory, and the frequency of the cache.

6. The method according to claim 3, wherein
the instruction delay-sensitive service comprises one or more of the following: an e-commerce transaction service, a financial transaction service, an online education service, and a high-performance computing service;
the cache bandwidth-sensitive service and the memory bandwidth-sensitive service comprise one or more of the following: a video-on-demand service, a big data read-write service, and a distributed storage service; and
the storage medium response delay-sensitive service comprises one or more of the following: a data backup service, and a video data transmission service between a video surveillance camera and a storage device.

7. The method according to claim 1, wherein target resources required for running the service are distributed in a plurality of resource groups, different resource groups comprise a same resource, and the adjusting the selected running parameter or an associated parameter associated with the selected running parameter comprises:
adjusting, at different amplitudes based on the different resource groups, a running parameter related to the target resource or an associated parameter associated with the running parameter related to the target resource.

8. The method according to claim 7, wherein the plurality of resource groups comprise a hot resource group and a warm resource group, resource usage of the hot resource group is higher than resource usage of the warm resource group, and the adjustment at different amplitudes comprises:
adjusting the running parameter related to the target resource or the associated parameter associated with the running parameter related to the target resource, to adjust the hot resource group to improving the resource usage or maintaining the original resource usage, and adjust the warm resource group to reducing the resource usage.

9. The method according to claim 8, wherein the type of sensitivity of the service comprises one or more of the following: an instruction delay-sensitive service that is sensitive to a response delay of instruction processing, a cache bandwidth-sensitive service that is sensitive to a cache bandwidth in the device, a memory bandwidth-sensitive service that is sensitive to a memory bandwidth in the device, and a storage medium response delay-sensitive service that is sensitive to a response delay of a storage medium in the device, wherein
for the instruction delay-sensitive service, the target resource is a processor core in the device, and the adjustment at different amplitudes comprises one or more of the following: increasing or skipping adjusting a frequency of a processor core in the hot resource group, and decreasing a frequency of a processor core in the warm resource group;
for the cache bandwidth-sensitive service, the target resource is a cache in the device, and the adjustment at different amplitudes comprises one or more of the following: increasing or skipping adjusting a frequency of a cache in the hot resource group, and decreasing a frequency of a cache in the warm resource group;
for the memory bandwidth-sensitive service, the target resource is a memory in the device, and the adjustment at different amplitudes comprises one or more of the following: increasing or skipping adjusting a frequency of a memory in the hot resource group, increasing or skipping adjusting a duty cycle of the memory in the hot resource group, decreasing a frequency of a memory in the warm resource group, and decreasing a duty cycle of the memory in the warm resource group; and
for the storage medium response delay-sensitive service, the target resource is a storage medium in the device, and the adjustment at different amplitudes comprises one or more of the following: maintaining a storage medium in the hot resource group in a working state, and setting a state of a storage medium in the warm resource group to a standby state.

10. The method according to claim 9, wherein the plurality of resource groups comprise a cold resource group, resource usage of the cold resource group is lower than the resource usage of the warm resource group, and the adjustment at different amplitudes further comprises:
for the instruction delay-sensitive service, turning off a part of or all processor cores in the cold resource group;
for the cache bandwidth-sensitive service, releasing a part of or all caches in the cold resource group;
for the memory bandwidth-sensitive service, releasing a part of or all memories in the cold resource group; and
for the storage medium response delay-sensitive service, setting a state of a storage medium in the cold resource group to an idle state.

11. The method according to claim 1, wherein after the adjusting the selected running parameter or an associated parameter associated with the selected running parameter, the method further comprises:
adjusting an adjustment amplitude of the selected running parameter or the associated parameter based on a difference between power consumption of the device after the adjustment and power consumption of the device before the adjustment and a difference between performance of the service after the adjustment and performance of the service before the adjustment; and
readjusting the selected running parameter or the associated parameter based on an adjusted adjustment amplitude, wherein power consumption of the device after the readjustment is lower than power consumption of the device before the readjustment.

12. The method according to claim 11, wherein target resources required for running the service are distributed in a plurality of resource groups, different resource groups comprise a same resource, and the adjusting the selected running parameter or an associated parameter associated with the selected running parameter comprises:
adjusting, at different amplitudes based on the different resource groups, a running parameter related to the target resource or an associated parameter associated with the running parameter related to the target resource;
the method further comprises:
adjusting a quantity of target resources in each resource group based on the difference; and
the adjusting an adjustment amplitude of the selected running parameter or the associated parameter comprises:
adjusting, at different amplitudes based on the different resource groups, an adjustment amplitude of the running parameter related to the target resource or the associated parameter associated with the running parameter related to the target resource.

13. The method according to any one of claims 1 to 12, wherein the device comprises at least one of a server and the storage medium.

14. An energy efficiency management apparatus, comprising:
a determining module, configured to detect a type of sensitivity of a service running in a device to a performance requirement; and
an adjustment module, configured to: select a part of a plurality of running parameters of the device based on the type of sensitivity of the service, wherein the selected running parameter is a running parameter with low relevance to the type of sensitivity of the service, and adjust the selected running parameter or an associated parameter associated with the selected running parameter to reduce a corresponding resource occupied by the service, wherein power consumption of the device after the adjustment is lower than power consumption of the device before the adjustment.

15. The apparatus according to claim 14, wherein the plurality of running parameters of the device comprise a plurality of running parameters necessary forequired for running the service.

16. The apparatus according to claim 14 or 15, wherein
the type of sensitivity of the service comprises one or more of the following: an instruction delay-sensitive service that is sensitive to a response delay of instruction processing, a cache bandwidth-sensitive service that is sensitive to a cache bandwidth in the device, a memory bandwidth-sensitive service that is sensitive to a memory bandwidth in the device, and a storage medium response delay-sensitive service that is sensitive to a response delay of a storage medium in the device.

17. The apparatus according to claim 16, wherein
for the instruction delay-sensitive service, the selected running parameter or the associated parameter is a parameter corresponding to a resource that has no impact on the response delay of instruction processing or has little impact on the response delay of instruction processing in a plurality of resources required for running the instruction delay-sensitive service;
for the cache bandwidth-sensitive service, the selected running parameter or the associated parameter is a parameter corresponding to a resource that has no impact on the cache bandwidth in the device or has little impact on the cache bandwidth in the device in a plurality of resources required for running the cache bandwidth-sensitive service;
for the memory bandwidth-sensitive service, the selected running parameter or the associated parameter is a parameter corresponding to a resource that has no impact on the memory bandwidth in the device or has little impact on the memory bandwidth in the device in a plurality of resources required for running the memory bandwidth-sensitive service; and
for the storage medium response delay-sensitive service, the selected running parameter or the associated parameter is a parameter corresponding to a resource that has no impact on the response delay of the storage medium in the device or has little impact on the response delay of the storage medium in the device in a plurality of resources required for running the storage medium response delay-sensitive service.

18. The apparatus according to claim 16 or 17, wherein
the plurality of running parameters of the device comprise one or more of the following: a state of a processor core in the device, a frequency of the processor core, a frequency of a memory, a duty cycle of the memory, a frequency of a cache, and a state of the storage medium;
for the instruction delay-sensitive service, the selected running parameter comprises one or more of the following: the frequency of the memory, the duty cycle of the memory, the frequency of the cache, and the state of the storage medium;
for the cache bandwidth-sensitive service, the selected running parameter comprises one or more of the following: the state of the processor core, the frequency of the processor core, the frequency of the memory, the duty cycle of the memory, and the state of the storage medium;
for the memory bandwidth-sensitive service, the selected running parameter comprises one or more of the following: the state of the processor core, the frequency of the processor core, the frequency of the cache, and the state of the storage medium; and
for the storage medium response delay-sensitive service, the selected running parameter comprises one or more of the following: the state of the processor core, the frequency of the processor core, the frequency of the memory, the duty cycle of the memory, and the frequency of the cache.

19. The apparatus according to claim 16, wherein
the instruction delay-sensitive service comprises one or more of the following: an e-commerce transaction service, a financial transaction service, an online education service, and a high-performance computing service;
the cache bandwidth-sensitive service and the memory bandwidth-sensitive service comprise one or more of the following: a video-on-demand service, a big data read-write service, and a distributed storage service; and
the storage medium response delay-sensitive service comprises one or more of the following: a data backup service, and a video data transmission service between a video surveillance camera and a storage device.

20. The apparatus according to claim 14, wherein target resources required for running the service are distributed in a plurality of resource groups, different resource groups comprise a same resource, and
the adjustment module is configured to adjust, at different amplitudes based on the different resource groups, a running parameter related to the target resource or an associated parameter associated with the running parameter related to the target resource.

21. The apparatus according to claim 20, wherein the plurality of resource groups comprise a hot resource group and a warm resource group, resource usage of the hot resource group is higher than resource usage of the warm resource group, and the adjustment at different amplitudes comprises:
adjusting the running parameter related to the target resource or the running parameter related to the target resource, to adjust the hot resource group to improving the resource usage or maintaining the original resource usage, and adjust the warm resource group to reducing the resource usage.

22. The apparatus according to claim 21, wherein the type of sensitivity of the service comprises one or more of the following: an instruction delay-sensitive service that is sensitive to a response delay of instruction processing, a cache bandwidth-sensitive service that is sensitive to a cache bandwidth in the device, a memory bandwidth-sensitive service that is sensitive to a memory bandwidth in the device, and a storage medium response delay-sensitive service that is sensitive to a response delay of a storage medium in the device, wherein
for the instruction delay-sensitive service, the target resource is a processor core in the device, and the adjustment at different amplitudes comprises one or more of the following: increasing or skipping adjusting a frequency of a processor core in the hot resource group, and decreasing a frequency of a processor core in the warm resource group;
for the cache bandwidth-sensitive service, the target resource is a cache in the device, and the adjustment at different amplitudes comprises one or more of the following: increasing or skipping adjusting a frequency of a cache in the hot resource group, and decreasing a frequency of a cache in the warm resource group;
for the memory bandwidth-sensitive service, the target resource is a memory in the device, and the adjustment at different amplitudes comprises one or more of the following: increasing or skipping adjusting a frequency of a memory in the hot resource group, increasing or skipping adjusting a duty cycle of the memory in the hot resource group, decreasing a frequency of a memory in the warm resource group, and decreasing a duty cycle of the memory in the warm resource group; and
for the storage medium response delay-sensitive service, the target resource is a storage medium in the device, and the adjustment at different amplitudes comprises one or more of the following: maintaining a storage medium in the hot resource group in a working state, and setting a state of a storage medium in the warm resource group to a standby state.

23. The apparatus according to claim 22, wherein the plurality of resource groups comprise a cold resource group, resource usage of the cold resource group is lower than the resource usage of the warm resource group, and the adjustment at different amplitudes further comprises:
for the instruction delay-sensitive service, turning off a part of or all processor cores in the cold resource group;
for the cache bandwidth-sensitive service, releasing a part of or all caches in the cold resource group;
for the memory bandwidth-sensitive service, releasing a part of or all memories in the cold resource group; and
for the storage medium response delay-sensitive service, setting a state of a storage medium in the cold resource group to an idle state.

24. The apparatus according to claim 14, further comprising:
an energy efficiency optimization module, configured to: adjust an adjustment amplitude of the selected running parameter or the associated parameter based on a difference between power consumption of the device after the adjustment and power consumption of the device before the adjustment and a difference between performance of the service after the adjustment and performance of the service before the, and readjust the selected running parameter or the associated parameter based on an adjusted adjustment amplitude, wherein power consumption of the device after the readjustment is lower than power consumption of the device before the readjustment.

25. The apparatus according to claim 24, wherein target resources required for running the service are distributed in a plurality of resource groups, different resource groups comprise a same resource, and
the adjustment module is configured to adjust, at different amplitudes based on the different resource groups, a running parameter related to the target resource or an associated parameter associated with the running parameter related to the target resource; and
the energy efficiency optimization module is further configured to: adjust a quantity of target resources in each resource group based on the difference, and adjust, at different amplitudes based on the different resource groups, an adjustment amplitude of the running parameter related to the target resource or the associated parameter associated with the running parameter related to the target resource.

26. The apparatus according to any one of claims 14 to 25, wherein the device comprises at least one of a server and the storage medium.

27. A computing device, comprising a processor and a storage, wherein the processor executes computer program code in the storage to implement the method according to any one of claims 1 to 13.

28. A computer-readable storage medium, wherein the storage medium stores computer program code; and when the computer program code is executed by a computing device, the computing device performs the method according to any one of claims 1 to 13.
